# FASCICULE DE BREVET EUROPEEN

(11) **EP 2 724 939 B1**
(45) Date de publication et mention de la délivrance du brevet: **06.07.2016**
(21) Numéro de dépôt: 13004824.2
(22) Date de dépôt: 08.10.2013
(51) Int. Cl.: B64D 31/00, B64C 27/00, B64C 27/12, B64C 27/14, B60W 10/08, B64D 35/02, B64D 35/08, B60W 20/00, B64D 27/24, B64D 27/02, B64C 19/00

(54) **Procédé de gestion d'une panne moteur sur un aéronef multimoteur muni d'une installation motrice hybride**
Verfahren zur Steuerung eines Triebwerkausfalls in einem Luftfahrzeug mit mehreren Triebwerken, das mit einer Hybrid-Triebwerksanlage ausgestattet ist
Method for managing an engine failure on a multi-engine aircraft provided with a hybrid powerplant

(30) Priorité: 29.10.2012 FR 1202897
(43) Date de publication de la demande: 30.04.2014
(73) Titulaire: Airbus Helicopters, 13725 Marignane Cedex (FR)
(72) Inventeur: Dyrla, Nadine, 13320 Bouc Bel Air (FR); Connaulte, Matthieu, 13510 Eguilles (FR); Cezard, Joris, 13250 Saint Chamas (FR)
(74) Mandataire: GPI & Associés

(56) Documents cités:
- EP-A1- 0 747 710
- EP-A1- 2 264 297
- EP-A1- 2 327 625
- DE-A1-102010 021 025
- FR-A1- 2 962 404

## Description

La présente invention se situe dans le domaine technique des installations motrices des aéronefs à voilure tournante. L'invention concerne un procédé de gestion d'une panne moteur sur un aéronef à voilure tournante muni d'une installation motrice hybride comportant au moins deux moteurs thermiques. L'invention concerne également un aéronef à voilure tournante comportant un dispositif de gestion d'une panne moteur équipé d'une telle installation motrice hybride.

Un aéronef à voilure tournante est classiquement pourvu d'au moins un rotor principal pour assurer sa sustentation, voire sa propulsion et généralement d'un rotor arrière pour notamment s'opposer au couple en lacet exercé par le rotor principal sur le fuselage de cet aéronef et pour permettre également de contrôler les mouvements en lacet de cet aéronef.

Afin d'entraîner en rotation le rotor principal et le rotor arrière, l'aéronef comporte une installation motrice qui peut comporter un ou plusieurs moteurs thermiques.

On distingue les aéronefs du type « monomoteur », dont l'installation motrice comporte un unique moteur thermique pour mettre en mouvement le rotor principal et le rotor arrière, et les aéronefs du type « multimoteur », dont l'installation motrice possède au moins deux moteurs thermiques à cet effet, parmi lesquelles se trouvent en particulier les aéronefs du type « bimoteur », dont l'installation motrice possède deux moteurs thermiques.

Il est à noter que l'on entend dans l'ensemble du texte par « moteur thermique » les turbomoteurs ou encore les moteurs à pistons pouvant être utilisés dans une telle installation motrice. L'expression « moteur thermique » est à opposer à l'expression « moteur électrique » qualifiant les moteurs mus par une puissance électrique.

Les aéronefs monomoteurs présentent des avantages par rapport aux aéronefs multimoteurs, tels qu'un coût raisonnable, des opérations de maintenance réduites et une consommation en carburant relativement faible.

Cependant, ces aéronefs monomoteurs présentent aussi des inconvénients.

En cas d'une avarie sur cet unique moteur thermique, l'installation motrice, et par suite l'aéronef monomoteur, présente des performances dégradées, pouvant aller jusqu'à l'incapacité d'entraîner le rotor principal et le rotor arrière. Dans ce cas, le pilote de l'aéronef doit alors entrer dans une phase de vol en autorotation, puis réaliser un atterrissage d'urgence, le rotor principal étant en autorotation. Il s'agit d'une partie délicate du pilotage des aéronefs notamment monomoteurs et une des raisons principales de la réduction du domaine de vol et de l'emploi de ce type d'aéronef.

En effet, le domaine de vol et les missions autorisées pour les aéronefs monomoteurs sont réduits par les offices de certification délivrant les autorisations de vol. Il est par exemple interdit de survoler, en Europe, avec un aéronef monomoteur une grande ville.

Par contre, les aéronefs munis d'au moins deux moteurs thermiques, tels les aéronefs bimoteurs, permettent d'une part d'avoir des performances accrues, notamment au niveau des charges utiles transportées et des distances franchissables, les moteurs thermiques fonctionnant simultanément, et d'autre part de sécuriser les capacités de vol de tels aéronefs, les moteurs thermiques étant aptes à se substituer l'un à l'autre en cas de défaillance de l'un d'entre eux. De fait, les restrictions de vol, telles que le survol d'une grande ville, sont levées pour ce type d'aéronef.

Cependant, les capacités de vol autorisées pour ces aéronefs peuvent également être limitées vis-à-vis de leurs capacités maximales afin d'assurer une sécurité minimale lors du vol. En effet, en cas de panne d'un moteur, il est parfois nécessaire que l'aéronef puisse continuer son vol avec un seul moteur dans le cas d'un aéronef bimoteur, donc avec des performances inférieures. De fait, les offices de certification prennent en compte ces performances inférieures avec un seul moteur thermique en fonctionnement pour définir les capacités autorisées de ces aéronefs, telles que les masses maximum décollable et atterrissable.

Afin de ne pas limiter inutilement le domaine de vol de ces aéronefs, il convient d'avoir un niveau de puissance disponible suffisamment élevé avec un seul moteur thermique, pour prendre en compte le risque de panne. Certains aéronefs bimoteurs voient donc leurs moteurs dimensionnés pour pouvoir utiliser l'aéronef avec un seul de ces moteurs, et se retrouvent donc sur-motorisés en vol normal, c'est-à-dire lorsque les deux moteurs thermiques fonctionnent conjointement. Les conséquences principales sont une augmentation de la consommation de l'aéronef, qui peut de plus être amplifiée par l'augmentation de sa masse à vide.

Un aéronef multimoteur, tel un aéronef bimoteur muni de deux turbomoteurs par exemple, dispose de différents régimes de fonctionnement. Tout d'abord, lorsque les deux moteurs thermiques sont fonctionnels, l'aéronef fonctionne sous des régimes AEO selon l'acronyme « All Engine Operative » en langue anglaise. On distingue alors pour chaque moteur thermique le régime *PMC* correspondant à la Puissance Maximale Continue, dont l'utilisation est illimitée dans le temps et le régime *PMD* correspondant à la Puissance Maximale de Décollage, qui fournit une puissance supérieure au régime *PMC* mais dont l'utilisation est généralement limitée à 5 minutes sur les aéronefs civils, et destinée spécifiquement pour les phases de décollage et d'atterrissage ainsi que pour les vols stationnaires de courte durée.

Lors d'une panne moteur sur un aéronef multimoteur, une défaillance sur au moins un moteur thermique entraîne une perte partielle ou totale de la puissance de ce moteur. Pour un tel aéronef, la probabilité d'avoir simultanément une panne sur plusieurs moteurs est relativement faible, conformément aux réglementations en vigueur. Généralement, lors d'une panne moteur, au moins un autre moteur thermique reste pleinement opérationnel, le ou les moteurs thermiques restant opérationnels assurant la motorisation de l'aéronef.

Dans le cas d'un aéronef bimoteur muni de deux turbomoteurs, cet aéronef fonctionne alors en mode dégradé, avec un seul moteur restant opérationnel et comprenant plusieurs régimes de surpuissance d'urgence désignés *OEI* selon l'acronyme « One Engine Inoperative » en langue anglaise. On distingue pour le turbomoteur restant opérationnel :
- un premier régime d'urgence, associant une puissance de super urgence dénommée *OEI 30",* utilisable pendant une durée de l'ordre de trente secondes consécutives,
- un deuxième régime d'urgence, associant une puissance maximale d'urgence dénommée *OEI 2',* utilisable pendant une durée de deux minutes, et
- un troisième régime d'urgence associant une puissance intermédiaire d'urgence dénommée *OEI cont,* utilisable pendant une durée illimitée couvrant par exemple la fin du vol.

Il est à noter que certains moteurs proposent un régime d'urgence unique, dénommée *OEI 2'30",* en lieu et place des régimes d'urgence *OEI 30"* et *OEI 2',* qui est utilisable pendant une durée de deux minutes trente secondes.

La puissance intermédiaire d'urgence *OEI cont* est destinée entre autres à assurer un vol de croisière, alors que la puissance de super urgence *OEI 30"* et la puissance maximale d'urgence *OEI* 2' ainsi que la puissance d'urgence unique *OEI 2'30"* sont destinées à réaliser des manoeuvres particulières telles qu'éviter un obstacle, effectuer un vol stationnaire ou bien un atterrissage.

De plus, la puissance de super urgence *OEI 30"* peut être utilisée deux ou trois fois suivant l'aéronef jusqu'à l'atterrissage de l'aéronef alors que la puissance maximale d'urgence *OEI* 2' et la puissance d'urgence unique *OEI 2'30"* peuvent être utilisées à plusieurs reprises, pendant un temps total cumulé ne dépassant pas un temps prédéterminé par le constructeur de l'aéronef et figurant dans les manuels de maintenance, par exemple dix minutes.

En effet, cette surpuissance fournie par le seul moteur thermique disponible pendant cette panne est obtenue en sollicitant ce moteur au-delà de son fonctionnement normal et de ses limites nominales. De fait, ce fonctionnement nécessite par la suite une maintenance spécifique et des coûts associés qui peuvent être importants.

De plus, les durées d'utilisation du premier régime d'urgence *OEI 30",* du deuxième régime d'urgence *OEI* 2' et du régime d'urgence unique *OEI 2'30"* sont limitées afin de ne pas générer de dégradations importantes voire immédiates sur le turbomoteur ou les moyens de transmission de puissance, telle la boîte de transmission principale de puissance.

D'autres solutions ont été étudiées pour fournir cette surpuissance, notamment afin d'éviter de surdimensionner ces moteurs thermiques, mais aucune n'est appliquée industriellement à ce jour. Par exemple, cette surpuissance pourrait être obtenue par l'injection d'eau ou de mélange eau/alcool en entrée d'air du moteur thermique ou bien par le refroidissement des pièces chaudes de ce moteur thermique par une circulation d'air ou d'eau. Il est également possible d'injecter un carburant auto-inflammable en aval de la chambre de combustion du moteur thermique ou bien utiliser un groupe auxiliaire de puissance comportant un moteur à combustion fonctionnant par exemple avec du kérosène ou de l' hydrazine.

Les régimes d'urgence *OEI 30", OEI* 2', *OEI 2'30"* et *OEI cont* sont contrôlés par un boîtier électronique de contrôle du moteur thermique. Chaque moteur est relié à un tel boîtier de contrôle, qui est couramment désigné par l'acronyme *EECU* pour « Electronic Engine Control Unit » en langue anglaise.

Ce type de boîtier électronique de contrôle *EECU* est présent sur la majorité des aéronefs pour contrôler le fonctionnement du ou des moteurs thermiques. Sur certains aéronefs, ce boîtier électronique de contrôle *EECU* est remplacé par un calculateur moteur, qui est couramment désigné par l'acronyme *FADEC* pour « Full Authority Digital Engine Control » en langue anglaise. Ce calculateur moteur *FADEC* a une autorité plus importante que le boîtier électronique de contrôle *EECU* et limite ainsi l'intervention du pilote dans la gestion du ou des moteurs thermiques.

Une solution envisagée pour améliorer les performances des aéronefs est l'utilisation d'une installation motrice « hybride ».

A l'instar du domaine automobile, une installation motrice « hybride » comporte au moins un moteur thermique et au moins un moteur électrique, la puissance motrice de l'installation motrice hybride pouvant être fournie soit par le moteur thermique seul, soit par le moteur électrique seul, soit encore par les deux moteurs conjointement. Pour le cas particulier des aéronefs bimoteur, une installation motrice hybride comporte deux moteurs thermiques fonctionnant simultanément et au moins un moteur électrique.

On connaît par exemple le document FR2952907 qui décrit une installation motrice hybride mise en oeuvre sur un aéronef monomoteur comportant un unique moteur thermique ainsi qu'un premier moteur électrique lié mécaniquement au rotor principal de l'aéronef et un second moteur électrique lié mécaniquement au rotor arrière. Cette installation motrice hybride comporte également un ensemble de batteries afin de stocker l'énergie électrique nécessaire à l'alimentation électrique des deux moteurs électriques.

Ces moteurs électriques peuvent intervenir en complément ou bien en remplacement du moteur thermique pour mettre en mouvement les rotors principal et arrière. De plus, ces moteurs électriques peuvent fonctionner en mode générateur pour transformer de la puissance mécanique en puissance électrique ainsi que pour servir de ralentisseur des rotors ou bien du moteur thermique.

On connaît également le document FR2962404 qui est considéré comme l'art antérieur le plus proche et divulgue les caractéristiques du préambule de la revendication 1. Il décrit l'architecture électrique d'une installation motrice hybride d'un aéronef à voilure tournante. Cette installation motrice comporte au moins un moteur thermique et au moins un moteur électrique ainsi qu'un réseau électrique principal et un réseau électrique auxiliaire. Ce réseau électrique principal est en charge de l'alimentation électrique générale de l'aéronef alors que le réseau électrique auxiliaire est dédié au système d'hybridation de cette installation motrice hybride.

Par ailleurs, le document DE102007017332 décrit un aéronef comprenant un propulseur constitué par une hélice, un moteur thermique entrainant le propulseur et une machine électrique. La machine électrique coopère avec le moteur thermique, fonctionnant d'une part comme un moteur électrique et d'autre part comme un générateur électrique. Ce moteur électrique fournit ainsi un surplus de puissance au moteur thermique, compris entre 15% et 35% de la puissance de ce moteur thermique.

De plus, le document FR2914697 fait état d'un turbomoteur, notamment destiné à un hélicoptère, muni d'un compresseur et d'une turbine libre ainsi qu'un moteur électrique lié à ce compresseur. Ce moteur électrique permet au turbomoteur d'avoir une meilleure capacité d'accélération tout en ayant la même marge de pompage en fournissant une quantité d'énergie cinétique de rotation supplémentaire au compresseur lors d'une phase d'accélération du turbomoteur.

On connaît enfin le document FR2961767 qui décrit un procédé de gestion d'un circuit électrique d'un véhicule comportant un moteur thermique d'entrainement d'un organe de propulsion et une machine électrique réversible reliée à au moins une batterie Ce procédé permet à la machine électrique de fonctionner en mode générateur afin de recharger cette batterie ou bien en mode moteur pour entraîner l'organe de propulsion.

En outre, l'arrière plan technologique comporte notamment les documents FR2947006, DE102010021025 et FR2735239.

Par contre, un des inconvénients majeurs de l'utilisation de moteurs électriques est le stockage de l'énergie électrique nécessaire à leur fonctionnement. En effet, plusieurs solutions de stockage de cette énergie électrique existent, telles que les batteries, les piles thermiques ou les supercapacités, mais chacune a des contraintes propres.

Par exemple, les batteries sont lourdes, voire très lourdes si une grande quantité d'énergie électrique doit être stockée, alors que les supercapacités peuvent fournir une puissance électrique importante, mais pendant un temps très limité. De plus, les piles thermiques sont à usage unique et ont une durée de fonctionnement limitée après activation.

Quelque soit ce moyen de stockage de l'énergie électrique, la quantité d'énergie électrique disponible reste limitée, alors que la masse de ce moyen de stockage de l'énergie électrique peut être importante.

Ainsi, le gain de performance que pourrait permettre d'obtenir l'utilisation d'un ou plusieurs moteurs électriques au sein de l'installation motrice d'un aéronef se heurte à plusieurs limitations liées au stockage de l'énergie électrique. Il faut par exemple trouver un équilibre entre le gain de performance de l'installation motrice hybride et l'augmentation de masse générée par l'utilisation de ces moyens de stockage de l'énergie électrique nécessaire au fonctionnement du ou des moteurs électriques.

La présente invention a alors pour objet de proposer un procédé de gestion d'une panne moteur sur un aéronef à voilure tournante muni d'une installation motrice hybride comportant au moins deux moteurs thermiques. Ce procédé permet ainsi au pilote, suite à une panne d'au moins un moteur thermique de cet aéronef, de manoeuvrer l'aéronef en sécurité, c'est-à-dire avec une puissance motrice suffisante, sans pour autant solliciter chaque moteur thermique restant opérationnel au-delà de conditions de fonctionnement prédéterminées.

Selon l'invention, un procédé de gestion d'une panne moteur sur un aéronef à voilure tournante comporte une installation motrice hybride munie d'au moins deux moteurs thermiques, d'au moins une machine électrique, d'une boîte de transmission principale de puissance et d'au moins un boîtier électronique de contrôle *EECU,* chaque boîtier électronique de contrôle *EECU* étant relié à un moteur thermique. Cet aéronef comporte également au moins un moyen de stockage d'énergie électrique alimentant la machine électrique et au moins un rotor principal entrainé au cours de chaque vol à une vitesse instantanée de rotation *Nr* par cette installation motrice hybride.

Chaque moteur thermique de cette installation motrice hybride peut fournir, en fonctionnement normal, au moins une Puissance Maximale Continue *PMC* à la boîte de transmission principale de puissance et, en fonctionnement d'urgence notamment suite à une panne d'un des moteurs thermiques de l'installation motrice hybride, des puissances d'urgence *OEI 30", OEI* 2' et *OEI Cont.*

De plus, les puissances fournies par chaque moteur thermique et chaque machine électrique s'ajoutent afin que l'installation motrice hybride fournisse une puissance motrice totale *W_{T}* à la boîte de transmission principale de puissance. Cependant, cette puissance motrice totale *W_{T}* est généralement constituée uniquement par la somme des puissances fournies par chaque moteur thermique, chaque machine électrique pouvant fournir une puissance auxiliaire en cas de besoin particulier, notamment en cas de défaillance d'au moins un moteur thermique.

L'expression « vitesse de rotation » du rotor principal est usuellement utilisée par l'homme du métier pour désigner la fréquence de rotation du rotor principal d'un aéronef. Cette vitesse de rotation du rotor principal est alors exprimée en radians par seconde (rad /s) ou bien en tours par minute (tr/mn).

De plus, au cours de chaque vol, le rotor principal d'un aéronef à voilure tournante a une vitesse nominale de rotation, définie par le constructeur de l'aéronef, une loi de variation de cette vitesse nominale de rotation est éventuellement définie en fonction de différents paramètres de vol tels que l'altitude, la température ou la vitesse d'avancement par exemple.

Par ailleurs, une machine électrique est par défaut une machine réversible. Elle peut donc avoir un fonctionnement en mode moteur, c'est-à-dire tel que la machine électrique transforme une puissance électrique en une puissance mécanique et un fonctionnement en mode générateur, c'est-à-dire tel que la machine électrique transforme une puissance mécanique en une puissance électrique. Par ailleurs, cette machine électrique peut par exemple être un moteur sans balai dénommé « brushless » en langue anglaise.

Cette machine électrique peut être placée en différentes positions au sein de l'installation motrice hybride selon le document FR2952907. Par exemple, elle peut être liée à la boîte de transmission principale de puissance, au moteur thermique ou bien directement au rotor principal de l'aéronef.

Ce procédé est remarquable en ce qu'il comporte trois étapes :
- durant une étape de contrôle, on contrôle pendant chaque vol le fonctionnement de chaque moteur thermique de l'aéronef par l'intermédiaire du boîtier électronique de contrôle *EECU* afin de détecter une éventuelle panne d'au moins un moteur thermique, un moteur thermique étant en panne lorsqu'au moins un autre moteur thermique de l'installation motrice hybride utilise ses puissances d'urgence,
- durant une étape de surveillance, on détermine une valeur de surveillance relative à au moins un paramètre de surveillance de l'aéronef et un seuil de détection d'un déficit de la puissance totale *W_{T},* puis on effectue une comparaison en comparant la valeur de surveillance au seuil de détection afin d'identifier un risque de déficit de la puissance totale *W_{T},* ce déficit de la puissance totale *W_{T}* apparaissant dès qu'au moins un moteur thermique doit fournir une puissance supérieure à une puissance prédéterminée *W_{P},* et
- durant une étape de commande, lorsqu'une panne d'au moins un moteur thermique est détectée et que le seuil de détection d'un déficit de la puissance totale *W_{T}* est dépassé, on commande la machine électrique pour fournir une puissance auxiliaire *Wₑ* afin que la puissance motrice totale *W_{T}* de l'installation motrice hybride soit suffisante pour manoeuvrer l'aéronef en sécurité, évitant ainsi l'apparition d'un déficit de la puissance totale *W_{T},* chaque moteur thermique restant opérationnel ne fournissant pas une puissance supérieure à la puissance prédéterminée *W_{P}.*

Lors d'une panne moteur sur un aéronef multimoteur, au moins un moteur thermique reste en général pleinement opérationnel. Dans ce cas, l'aéronef fonctionne alors en mode dégradé et chaque moteur thermique restant fonctionnel peut alors fonctionner selon les régimes de surpuissance d'urgence *OEI* évoqués précédemment et gérés par le boîtier électronique de contrôle *EECU* de chaque moteur thermique.

Le procédé selon l'invention vise cependant à limiter, voire à éviter, ce fonctionnement de chaque moteur thermique restant opérationnel selon ces régimes de surpuissance d'urgence *OEI,* par la fourniture d'une puissance auxiliaire *Wₑ* à la boîte de transmission principale de puissance par l'intermédiaire de la machine électrique de l'installation motrice hybride.

La défaillance subie par au moins un moteur thermique lors de cette panne moteur se caractérise par une chute de la puissance de ce moteur thermique, qui peut avoir pour conséquence une chute de la puissance motrice totale *W_{T}* fournie par l'installation motrice hybride à la boîte de transmission principale de puissance et, par suite, une chute de la puissance au niveau du rotor principal et du rotor arrière de l'aéronef.

Tout d'abord, afin de détecter cette panne d'au moins un moteur thermique de l'aéronef, on contrôle, durant une étape de contrôle, pendant chaque vol de l'aéronef, le fonctionnement de chaque moteur thermique. Ce contrôle et cette détection de panne sont généralement réalisés de façon connue par l'intermédiaire de chaque boîtier électronique de contrôle *EECU* ou bien de chaque calculateur moteur *FADEC* lorsque l'aéronef en dispose. En effet, chaque boîtier électronique de contrôle *EECU* ou bien chaque calculateur moteur *FADEC* gère des butées *OEI* limitant la puissance de ces moteurs thermiques en fonctionnement normal et permettant, lors de la panne d'au moins un moteur thermique de l'installation motrice hybride, la levée de ces butées *OEI* pour chaque moteur thermique restant opérationnel et, par suite, la mise en oeuvre des puissances d'urgence *OEI 30", OEI* 2' et *OEI Cont* pour chaque moteur thermique restant opérationnel.

Cette détection de panne peut également être effectuée grâce à un autre instrument de l'aéronef couramment désigné selon l'acronyme *FLI* pour « First Limit Indicator » en langue anglaise et qui indique certaines limites d'utilisation de l'aéronef et de chaque moteur thermique de son installation motrice.

Lors d'une panne d'un moteur thermique, au moins un autre moteur thermique de l'installation motrice hybride reste opérationnel, c'est-à-dire qu'il peut fournir une puissance motrice à la boîte de transmission principale de puissance.

Ainsi, lorsqu'un moteur thermique est effectivement en panne, la puissance motrice total *W_{T}* maximale qui peut être fournie par l'installation motrice hybride à la boîte de transmission principale de puissance et, par suite, la puissance maximale disponible au niveau du rotor principal de l'aéronef sont évidemment plus faibles que lorsque tous les moteurs thermiques sont opérationnels, le moteur thermique en panne fournissant une puissance dégradée, voire ne fournissant aucune puissance. Par suite, lorsque le pilote sollicite le rotor principal de l'aéronef pour réaliser une manoeuvre particulière, telle qu'un vol stationnaire, un atterrissage ou une augmentation de l'altitude pour éviter un obstacle, la puissance demandée au niveau du rotor principal augmente et, par suite, la puissance nécessaire au niveau de la boîte de transmission principale de puissance pour entraîner ce rotor principal augmente également. Cette puissance nécessaire au niveau de la boîte de transmission principale de puissance peut alors être supérieure à la puissance motrice totale *W_{T}* disponible, c'est-à-dire à la somme des puissances que peut fournir chaque moteur thermique restant opérationnel dans les conditions de fonctionnement prédéterminées de ces moteurs thermiques. Un déficit de la puissance totale *W_{T}* apparaît alors par rapport à la puissance nécessaire au niveau de la boîte de transmission principale de puissance.

Ces conditions de fonctionnement prédéterminées se caractérisent principalement par une puissance prédéterminée *W_{P}* que chaque moteur thermique ne doit pas dépasser ou, tout du moins, dont le dépassement doit être limité. Ce déficit de la puissance totale *W_{T}* apparaît alors dès qu'au moins un moteur thermique doit fournir une puissance supérieure à cette puissance prédéterminée *W_{P}* et correspond à la différence entre la puissance nécessaire au niveau de la boîte de transmission principale de puissance et la somme des puissances prédéterminées *W_{P}* de chaque moteur thermique restant opérationnel.

Durant une étape de surveillance, on détermine une valeur de surveillance relative à au moins un paramètre de surveillance de l'aéronef et un seuil de détection d'un déficit de la puissance totale *W_{T}.* Chaque paramètre de surveillance peut par exemple être une caractéristique de chaque moteur thermique ou bien une caractéristique de fonctionnement du rotor principal et la valeur de surveillance peut être égale à un seul paramètre de surveillance ou bien à une combinaison de plusieurs de ces paramètres de surveillance. En suite, une comparaison de la valeur de surveillance et du seuil de détection d'un déficit de la puissance totale *W_{T}* permet d'identifier éventuellement un risque de déficit de la puissance totale *W_{T}* et, de fait, d'anticiper son apparition.

En effet, le seuil de détection d'un déficit de la puissance totale *W_{T}* correspond à une limite de la valeur de surveillance correspondant à l'apparition d'un déficit de la puissance totale *W_{T}* en prenant en compte une marge de sécurité permettant ainsi d'anticiper l'apparition du déficit de la puissance totale *W_{T}.* Cette limite de la valeur de surveillance est fonction de cette valeur de surveillance, c'est-à-dire de chaque paramètre permettant de déterminer cette valeur de surveillance ainsi que des conditions de vol alors que la marge de sécurité est déterminée par l'homme du métier en fonction du degré d'anticipation désiré du déficit de la puissance totale *W_{T}.*

Ainsi, on identifie un risque de déficit de la puissance totale *W_{T}* dès que la valeur de surveillance dépasse le seuil de détection afin d'anticiper l'apparition de ce déficit de la puissance totale *W_{T}.* Suivant le ou les paramètres de surveillance permettant de déterminer la valeur de surveillance, le seuil de détection d'un déficit de la puissance totale *W_{T}* peut être une limite supérieure ou bien une limite inférieure de la valeur de surveillance.

Afin d'éviter l'apparition de ce déficit de la puissance totale *W_{T},* une puissance auxiliaire *Wₑ* doit être fournie à la boîte de transmission principale de puissance pour permettre à l'aéronef de réaliser la manoeuvre demandée par le pilote en sécurité. Cette puissance auxiliaire *Wₑ* est traditionnellement obtenue par les moteurs thermiques restant opérationnels et qui peuvent fournir des puissances d'urgence *OEI 30", OEI* 2' et *OEI cont.*

Avantageusement, le procédé selon l'invention permet à la machine électrique de l'installation motrice hybride de fournir cette puissance auxiliaire *Wₑ,* durant une étape de commande. Ainsi, lorsqu'une panne d'au moins un moteur thermique est détectée et que l'apparition d'un déficit de la puissance totale *W_{T}* est anticipée, c'est-à-dire que le seuil de détection d'un déficit de la puissance totale *W_{T}* est dépassé, on commande la machine électrique, fonctionnant alors en mode moteur, pour fournir cette puissance auxiliaire *Wₑ* à la boîte de transmission principale de puissance, cette puissance auxiliaire *Wₑ* s'ajoutant alors à la puissance fournie par chaque moteur thermique restant opérationnel. La puissance motrice totale *W_{T}* de l'installation motrice hybride est alors suffisante pour manoeuvrer l'aéronef en sécurité et chaque moteur thermique restant opérationnel fournit une puissance inférieure à la puissance prédéterminée *W_{P}.*

Ainsi, le procédé selon l'invention permet de faire face à des pointes de charges de chaque moteur thermique restant opérationnel, sans le solliciter au-delà de sa puissance prédéterminée *W_{P}.* Ce procédé s'inscrit alors dans le cadre de la sécurisation des vols des aéronefs à voilures tournantes en cas de défaillance d'au moins un moteur thermique dont ils sont équipés.

Différents modes de réalisation de l'invention peuvent correspondre à différentes conditions de fonctionnement prédéterminées des moteurs thermiques de l'installation motrice hybride de l'aéronef.

Selon un premier mode de réalisation de l'invention, la puissance prédéterminée *W_{P}* de chaque moteur thermique est la puissance d'urgence *OEI 30"* de ce moteur thermique. En effet, chaque moteur thermique est dimensionné pour fournir cette puissance d'urgence *OEI 30"* lors de la panne d'au moins un autre moteur de l'installation motrice hybride. De fait, ces moteurs thermiques se trouvent surdimensionnés en vol normal, avec pour conséquence une augmentation de la consommation de l'aéronef et de sa masse à vide. Le procédé selon l'invention permet, avantageusement par l'apport de cette puissance auxiliaire *Wₑ* de limiter ce surdimensionnement des moteurs thermiques, et par suite, de réduire l'augmentation de la consommation de l'aéronef et éventuellement de sa masse à vide.

Selon un second mode de réalisation de l'invention, la puissance prédéterminée *W_{P}* de chaque moteur thermique est la puissance d'urgence *OEI* 2' de ce moteur thermique. De même que pour que le premier mode de réalisation de l'invention, le procédé selon l'invention permet, avantageusement par l'apport de cette puissance auxiliaire *Wₑ* de limiter ce surdimensionnement des moteurs thermiques, notamment concernant cette puissance d'urgence *OEI* 2' et par suite, de réduire l'augmentation de la consommation de l'aéronef et éventuellement de sa masse à vide.

Selon un troisième mode de réalisation de l'invention, la puissance prédéterminée *W_{P}* de chaque moteur thermique est la puissance d'urgence *OEI Cont* de ce moteur thermique. De même que pour que les premier et second modes de réalisation de l'invention, le procédé selon l'invention permet, avantageusement par l'apport de cette puissance auxiliaire *Wₑ* de limiter ce surdimensionnement des moteurs thermiques, notamment concernant cette puissance d'urgence *OEI Cont'* et par suite, de réduire l'augmentation de la consommation de l'aéronef et éventuellement de sa masse à vide.

Selon un quatrième mode de réalisation de l'invention, la puissance prédéterminée *W_{P}* de chaque moteur thermique est la Puissance Maximale Continue *PMC* de ce moteur thermique. Dans ce cas, le procédé selon l'invention permet de ne pas utiliser les régimes d'urgence *OEI 30", OEI* 2' et *OEI Cont* en cas de panne d'un moteur thermique, la puissance auxiliaire *Wₑ* fournie par la machine électrique étant suffisante pour compenser la panne moteur. De fait, les moteurs thermiques n'étant pas surdimensionnés pour pouvoir être utilisés en régime d'urgence *OEI 30", OEI 2*' et *OEI Cont,* il n'y a pas d'augmentation de la consommation de l'aéronef, ni éventuellement de sa masse à vide. De plus, le procédé selon l'invention permet de supprimer les coûts de la maintenance spécifique liée à l'utilisation de ces régimes d'urgence *OEI 30", OEI 2*' et *OEI Cont* ainsi que les temps d'immobilisation de l'aéronef qui en découlent.

Par ailleurs, les étapes de contrôle et de surveillance peuvent être séquentielles ou bien simultanées. En effet, on fournit, lors de l'étape de commande, la puissance auxiliaire *Wₑ* sous deux conditions, d'une part la présence d'une panne d'au moins un moteur thermique et d'autre part le dépassement du seuil de détection d'un déficit de la puissance totale *W_{T}.* De fait, la comparaison de la valeur de surveillance et du seuil de détection d'un déficit de la puissance totale *W_{T}* peut être effectuée après que la panne d'au moins un moteur thermique ait été détectée, les étapes de contrôle et de surveillance étant alors séquentielles.

Cependant, afin d'être plus réactifs dans le déclenchement de la fourniture de la puissance auxiliaire *Wₑ,* la détection d'une panne d'au moins un moteur thermique et la comparaison de la valeur de surveillance et du seuil de détection peuvent être réalisées en parallèle, les étapes de contrôle et de surveillance étant alors simultanées.

De plus, la machine électrique est alimentée en énergie électrique par le moyen de stockage d'énergie électrique dont la capacité est limitée. Il est donc important de limiter l'utilisation de la machine électrique en mode moteur au juste nécessaire afin de minimiser la consommation de cette énergie électrique ainsi que le temps d'utilisation possible de la machine électrique, et, par suite, la masse du système de stockage.

En effet, une fois le moyen de stockage d'énergie électrique vide, le procédé selon l'invention ne peut plus être utilisé afin d'éviter l'apparition d'un déficit de la puissance totale *W_{T}* consécutif à une panne d'un moteur thermique. Il est donc essentiel de ne pas utiliser la machine électrique dès qu'une panne d'un moteur thermique est détectée, mais uniquement quand cela est nécessaire, c'est-à-dire quand d'une part une panne d'au moins un moteur thermique est détectée et d'autre part le seuil de détection d'un déficit de la puissance totale *W_{T}* est dépassé. Ainsi, l'énergie électrique contenue dans le moyen de stockage de l'énergie électrique est préservée et utilisée de façon optimum tout en garantissant la sécurisation des manoeuvres de l'aéronef malgré la panne moteur.

De préférence, la machine électrique fournit la puissance auxiliaire *Wₑ* juste nécessaire en complément de la puissance prédéterminée *W_{P}* fournie par chaque moteur thermique restant opérationnel. Par exemple, la puissance auxiliaire *Wₑ* peut être régulée par l'intermédiaire des paramètres de surveillance. En effet, ces paramètres de surveillance évoluent dès que la puissance auxiliaire *Wₑ* est fournie par la machine électrique à la boîte de transmission principale de puissance et le fonctionnement de chaque moteur thermique est limité à la puissance prédéterminée *W_{P}.*

Il est cependant possible que la machine électrique fournisse sa puissance maximum à la boîte de transmission principale de puissance, le boitier électronique de contrôle *EECU* de chaque moteur thermique restant opérationnel régulant alors le fonctionnement de ces moteurs thermiques afin qu'ils fournissent la puissance juste nécessaire à la boîte de transmission principale de puissance.

Durant l'étape de surveillance du procédé selon l'invention, chaque paramètre de surveillance peut être une caractéristique de chaque moteur thermique ou bien une caractéristique de fonctionnement du rotor principal de l'aéronef.

Par exemple, un premier paramètre de surveillance est le couple *C_{M}* fourni par chaque moteur thermique et mesuré par un premier moyen de mesure. Lors d'une panne d'un moteur thermique, le couple *C_{M}* de chaque autre moteur thermique restant opérationnel augmente avec la puissance de ce moteur thermique et est donc représentatif de la puissance de ce moteur thermique. Ainsi, si le couple *C_{M}* d'un moteur thermique restant opérationnel est supérieur à un premier seuil de détection d'un déficit de la puissance totale *W_{T},* cela signifie que ce moteur thermique à une puissance proche ou supérieure à la puissance prédéterminée *W_{P}* et qu'un risque de déficit de la puissance totale *W_{T}* de l'installation motrice hybride est identifié. En effet, ce premier seuil de détection correspond à une limite supérieure du couple *C_{M}* correspondant à l'apparition d'un déficit de la puissance totale *W_{T}* à laquelle est ajoutée une marge de sécurité permettant ainsi d'anticiper cette apparition du déficit de la puissance totale *W_{T}.*

Par ailleurs, si les moteurs thermiques de l'installation motrice hybride sont des turbomoteurs, un second paramètre de surveillance peut être la température *T4* de la chambre de combustion de chaque turbomoteur mesurée par un second moyen de mesure. Lors d'une panne d'un moteur thermique, la température *T4* de la chambre de combustion de chaque autre moteur thermique restant opérationnel augmente avec la puissance de ce moteur thermique et est donc représentative de la puissance de ce moteur thermique. Ainsi, si la température *T4* de la chambre de combustion d'un moteur thermique restant opérationnel est supérieure à un second seuil de détection d'un déficit de la puissance totale *W_{T},* cela signifie que ce moteur thermique à une puissance proche ou supérieure à la puissance prédéterminée *W_{P}* et qu'un risque de déficit de la puissance totale *W_{T}* de l'installation motrice hybride est identifié. En effet, ce second seuil de détection correspond à une limite supérieure de cette température *T4* correspondant à l'apparition d'un déficit de la puissance totale *W_{T}* à laquelle est ajoutée une marge de sécurité permettant ainsi d'anticiper cette apparition du déficit de la puissance totale *W_{T}.*

De même, ces moteurs thermiques étant des turbomoteurs, un troisième paramètre de surveillance est la vitesse instantanée de rotation *N1* d'un compresseur de chaque moteur thermique, mesurée par un troisième moyen de mesure. Lors d'une panne d'un moteur thermique, la vitesse instantanée de rotation *N1* du compresseur de chaque autre moteur thermique restant opérationnel augmente avec la puissance de ce moteur thermique et est donc représentative de la puissance de ce moteur thermique. Ainsi, si cette vitesse instantanée de rotation *N1* du compresseur d'un moteur thermique restant opérationnel est supérieure à un troisième seuil de détection d'un déficit de la puissance totale *W_{T},* cela signifie que ce moteur thermique à une puissance proche ou supérieure à la puissance prédéterminée *W_{P}* et qu'un risque de déficit de la puissance totale *W_{T}* de l'installation motrice hybride est identifié. En effet, ce troisième seuil de détection correspond à une limite supérieure de cette vitesse instantanée de rotation *N1* correspondant à l'apparition d'un déficit de la puissance totale *W_{T}* à laquelle est ajoutée une marge de sécurité permettant ainsi d'anticiper cette apparition du déficit de la puissance totale *W_{T}.*

Il peut également être intéressant de comparer le comportement de deux moteurs thermiques au travers d'un de ces trois paramètres par exemple. En effet, l'utilisation simultanée de plusieurs moteurs est une utilisation équilibrée, chaque moteur fournissant une puissance égale à la boîte de transmission principale de puissance. Par exemple, lors d'une panne d'un des moteurs, la vitesse instantanée de rotation *N1* d'un compresseur du moteur en panne devient nettement inférieure à la vitesse instantanée de rotation *N1* d'un compresseur d'un moteur restant opérationnel. Ainsi la différence entre les vitesses instantanées de rotation *N1* d'un compresseur de deux moteurs thermiques peut être caractéristique d'une panne d'un de ces moteurs et constituée la valeur de surveillance.

Les valeurs de ces trois paramètres de surveillance, qui sont des caractéristiques de chaque moteur thermique, peuvent être obtenues par l'intermédiaire d'un boîtier électronique de contrôle *EECU* pour chaque moteur thermique.

De plus, sur certains aéronefs, ce boîtier électronique de contrôle *EECU* peut être remplacé par un calculateur moteur *FADEC.* Ce calculateur moteur *FADEC* peut également fournir les valeurs de ces trois paramètres de surveillance.

Enfin, un quatrième paramètre de surveillance peut être la vitesse instantanée de rotation *Nᵣ* du rotor principal de l'aéronef, mesurée par un quatrième moyen de mesure. Lors d'une panne d'un moteur thermique, cette vitesse instantanée de rotation *Nᵣ* du rotor principal chute avec la puissance de ce rotor principal. De plus, le rotor principal étant entraîné en rotation par l'ensemble des moteurs thermiques par l'intermédiaire de la boîte de transmission principale de puissance, la chute de cette puissance au niveau du rotor principal peut être représentative d'un déficit de la puissance totale *W_{T}* de l'installation motrice hybride. Ainsi, si cette vitesse instantanée de rotation *Nᵣ* du rotor principal est inférieure à un quatrième seuil de détection d'un déficit de la puissance totale *W_{T},* cela signifie qu'un risque de déficit de la puissance totale *W_{T}* de l'installation motrice hybride est identifié. En effet, ce quatrième seuil de détection correspond à une limite inférieure de cette vitesse instantanée de rotation *Nᵣ* correspondant à l'apparition d'un déficit de la puissance totale *W_{T}* à laquelle est soustraite une marge de sécurité permettant ainsi d'anticiper cette apparition du déficit de la puissance totale *W_{T}.*

On constate ainsi que chaque paramètre de surveillance peut être comparé à un seuil de détection d'un déficit de la puissance totale *W_{T}* à partir duquel on peut considérer qu'un risque de déficit de la puissance totale *W_{T}* de l'installation motrice hybride est identifié. Ce seuil de détection est généralement une limite supérieure pour les paramètres de surveillance qui sont des caractéristiques de chaque moteur thermique, alors que c'est une limite inférieure pour, par exemple, la vitesse instantanée de rotation *Nᵣ* du rotor principal.

De plus, on peut combiner plusieurs paramètres de surveillance dans une loi préétablie pour déterminer la valeur de surveillance. Cette combinaison de paramètres de surveillance peut permettre par exemple de fiabiliser l'identification du risque de déficit de la puissance totale *W_{T}.* Cette loi préétablie est généralement spécifique à chaque moteur thermique ainsi qu'à chaque aéronef utilisant ces moteurs thermiques.

On peut également utiliser la dérivée temporelle de chaque paramètre de surveillance afin d'anticiper au plus tôt et de façon fiable l'apparition du déficit de la puissance totale *W_{T}* de l'installation motrice hybride. En effet, la dérivée temporelle du paramètre de surveillance permet de détecter une variation de la valeur de ce paramètre de surveillance. Par exemple, si cette dérivée temporelle est positive avec une valeur absolue importante, on peut en déduire que la valeur de ce paramètre de surveillance augmente rapidement. De plus, si la valeur de ce paramètre de surveillance est proche de sa limite supérieure, on peut anticiper l'apparition d'un déficit de la puissance totale *W_{T}* de l'installation motrice hybride.

De fait, une dérivée temporelle de chaque paramètre de surveillance peut être déterminée lors de l'étape de surveillance et on détermine la valeur de surveillance selon une loi préétablie combinant au moins un paramètre de surveillance et sa dérivée temporelle.

Par ailleurs, les paramètres de surveillance, par exemple la température *T4* de la chambre de combustion d'un moteur thermique, peuvent varier avec les conditions de vols telles que la température extérieure à l'aéronef, son altitude ainsi que sa vitesse. Par suite, le seuil de détection, qui est déterminé à partir d'au moins un paramètre de surveillance peut également varier en fonction de ces conditions de vol.

Avantageusement, la fourniture de cette puissance auxiliaire *Wₑ* est immédiate une fois la panne moteur détectée et le seuil de détection d'un déficit de la puissance totale *W_{T}* dépassé. En effet, une machine électrique est capable de fournir cette puissance auxiliaire *Wₑ* dès sa mise en marche, contrairement à un moteur thermique qui nécessite un temps de montée en régime plus ou moins long suivant le type de moteur thermique.

De plus, cette puissance électrique peut être utilisée de façon transitoire, afin de compenser partiellement la perte de puissance au niveau de la boîte de transmission principale de puissance, suite à la panne d'au moins un moteur thermique et jusqu'à ce que la montée en régime de chaque moteur thermique restant opérationnel permettant de fournir la puissance nécessaire.

Par ailleurs, l'utilisation du procédé selon l'invention peut permettre l'augmentation d'une part de la masse maximum au décollage de l'aéronef et d'autre part de son domaine de vol.

En effet, la masse maximum au décollage de l'aéronef peut être limitée par les performances de cet aéronef en cas de panne d'au moins un moteur thermique, notamment pendant la phase de fonctionnement des moteurs thermiques restant opérationnels aux régimes d'urgence *OEI 30", OEI* 2' et *OEI Cont.*

De la sorte, la fourniture de la puissance auxiliaire *Wₑ* peut permettre, comme évoqué précédemment, de limiter le surdimensionnement des moteurs thermiques en réduisant le niveau des puissances d'urgence *OEI 30", OEI 2*' et *OEI Cont,* voire en les supprimant, et, par suite, de réduire la masse à vide de l'aéronef ainsi que sa consommation de carburant. De fait, ce gain de masse de l'aéronef peut permettre d'augmenter d'une part les performances de cet aéronef et d'autre part sa masse maximum au décollage.

De plus, les performances de cet aéronef étant améliorées et sa consommation de carburant réduite, l'utilisation du procédé selon l'invention permet également d'augmenter le domaine de vol d'un tel aéronef.

Avantageusement, on affiche selon le procédé de l'invention sur un moyen d'affichage de l'aéronef une information relative à la puissance auxiliaire *Wₑ* disponible. Ainsi, le pilote de l'aéronef connait en permanence le niveau de puissance auxiliaire *Wₑ* disponible et il peut gérer cette puissance auxiliaire disponible pour d'une part réaliser certaines manoeuvres sans solliciter chaque moteur thermique restant opérationnel au-delà de la puissance prédéterminée *W_{P}* et d'autre part conserver une puissance auxiliaire *Wₑ* disponible lui permettant de réaliser une manoeuvre afin par exemple d'éviter un obstacle ou bien d'atterrir.

Cette information peut par exemple être le temps d'utilisation possible de cette puissance auxiliaire *Wₑ* à son niveau maximum *Wₘₐₓ,* ce temps étant déterminé en fonction de l'énergie électrique disponible dans le moyen de stockage alimentant la machine électrique.

Selon ce procédé, on affiche également sur ce moyen d'affichage une indication informant si le procédé est opérationnel. Le procédé est opérationnel lorsqu'il est capable de fournir une puissance auxiliaire *Wₑ* à la boîte de transmission principale de puissance après détection d'une panne d'au moins un moteur thermique.

En effet, ce procédé ne peut être opérationnel qu'en vol après détection d'une panne d'au moins un moteur thermique. De plus, ce procédé peut ne pas être opérationnel par exemple par manque d'énergie électrique dans le moyen de stockage. Cette indication informant si le procédé est opérationnel peut être une couleur, sur un moyen d'affichage, de l'information de la puissance auxiliaire *Wₑ* disponible, par exemple vert quand le procédé est opérationnel et rouge quand le procédé n'est pas opérationnel. Ainsi, lorsque toute la puissance auxiliaire *Wₑ* a été consommée, le moyen d'affichage affiche un temps d'utilisation possible de cette puissance auxiliaire *Wₑ* de « 0 seconde » en rouge.

On peut également afficher la puissance auxiliaire *Wₑ* disponible sous la forme d'une information de la puissance motrice totale *W_{T}* maximale que peut fournir l'installation motrice hybride, à l'instar de l'affichage de la puissance disponible selon les régimes de puissance d'urgence OEI 30" et OEI 2', cette puissance motrice totale *W_{T}* maximale étant la somme de la puissance prédéterminée *W_{P}* de chaque moteur thermique restant opérationnel et de la puissance auxiliaire *Wₑ* disponible. Cette information peut alors être variable en fonction de l'énergie électrique disponible dans le moyen de stockage de l'énergie électrique.

Par ailleurs, la puissance auxiliaire *Wₑ* disponible est fonction de la quantité d'énergie disponible dans le moyen de stockage présent dans l'aéronef. Ainsi, plus le moyen de stockage est important, plus la puissance auxiliaire *Wₑ* disponible est importante ou bien plus le temps de disponibilité de la puissance auxiliaire *Wₑ* est grand.

Le moyen de stockage de l'énergie électrique peut par exemple comporter, au moins une supercapacité qui est un condensateur capable de fournir une puissance importante dans un temps limité, au moins un système de stockage d'énergie cinétique, au moins une batterie non rechargeable, de type pile thermique par exemple ou bien au moins une batterie rechargeable.

Par ailleurs, la machine électrique peut être utilisée en mode générateur pour transformer une énergie mécanique fournie par exemple par le moteur thermique ou bien par le rotor principal en énergie électrique.

Par suite, le moyen de stockage de l'énergie électrique comportant au moins un moyen rechargeable de stockage de cette énergie électrique destinée à alimenter électriquement la machine électrique lorsqu'elle fonctionne en mode moteur, la machine électrique en mode générateur fournit une énergie électrique afin de charger chaque moyen rechargeable de stockage.

De plus, au moins un moyen rechargeable de stockage peut également être destiné à l'alimentation électrique générale de l'aéronef, notamment avant le démarrage d'un moteur thermique, pour le démarrage de ce moteur thermique et, en cas d'urgence, lorsque les sources primaires de génération d'électricité de l'aéronef ne fournissent plus assez d'énergie aux équipements avioniques permettant ainsi la poursuite du vol en toute sécurité. Chaque moyen rechargeable de stockage remplace alors au moins partiellement ou en totalité les batteries utilisées traditionnellement pour l'alimentation électrique générale de l'aéronef alimentant notamment les équipements avioniques et les appareils électriques de l'aéronef.

De la sorte, la machine électrique en mode générateur peut fournir l'énergie électrique nécessaire au fonctionnement du réseau électrique de l'aéronef, au travers par exemple d'un convertisseur de tension, remplaçant au moins partiellement ou en totalité le générateur principal ou le démarreur-générateur présent traditionnellement dans l'aéronef, le démarreur-générateur pouvant se limiter alors à un simple démarreur.

Avantageusement, l'augmentation de masse due à la machine électrique et au moyen de stockage est en partie compensée par la suppression d'au moins une batterie principale et/ou d'au moins un générateur principal présents traditionnellement dans l'aéronef.

Dans le cas où le moyen de stockage est utilisé à la fois pour l'alimentation électrique de la machine électrique et pour l'alimentation électrique générale de l'aéronef, la totalité de l'énergie électrique disponible dans ce moyen de stockage ne peut pas être utilisée pour alimenter la machine électrique. En effet, en vol d'urgence, suite à une panne d'un moteur thermique ou bien des générateurs principaux d'électricité, une partie de cette énergie électrique est destinée à alimenter les équipements avioniques essentiels de l'aéronef.

De fait, une partie de l'énergie électrique disponible dans ce moyen de stockage est réservée pour alimenter électriquement ces équipements avioniques essentiels, alors que le reste de l'énergie électrique disponible peut être fournie à la machine électrique pour fournir une puissance auxiliaire *Wₑ* à la boîte de transmission principale de puissance.

La présente invention a aussi pour objet un aéronef à voilure tournante comportant un dispositif de gestion d'une panne moteur de cet aéronef. Ce dispositif est muni d'une installation motrice hybride qui comporte au moins deux moteurs thermiques, au moins une machine électrique, une boîte de transmission principale de puissance et au moins un boîtier électronique de contrôle *EECU,* chaque boîtier électronique de contrôle *EECU* étant relié à un moteur thermique. Chaque moteur thermique peut fournir au moins une Puissance Maximale Continue *PMC* ainsi que des puissances d'urgence *OEI 30", OEI* 2' et *OEI Cont* et l'installation motrice hybride fournit une puissance motrice totale *W_{T}* à la boîte de transmission principale de puissance.

Ce dispositif de gestion d'une panne moteur comporte de plus au moins un moyen de stockage d'énergie électrique et un moyen de commande de la machine électrique. L'aéronef comporte également au moins un rotor principal entraîné en rotation par l'installation motrice hybride et tournant à une vitesse instantanée de rotation en vol.

Ce dispositif est remarquable en ce qu'il comporte un moyen de surveillance pour déterminer une valeur de surveillance relative à au moins un paramètre de surveillance de l'aéronef et un seuil de détection d'un déficit de la puissance totale *W_{T},* puis effectuer une comparaison en comparant la valeur de surveillance au seuil de détection afin d'identifier un risque de déficit de la puissance totale *W_{T},* ce déficit de la puissance totale *W_{T}* apparaissant dès qu'au moins un moteur thermique doit fournir une puissance supérieure à une puissance prédéterminée *W_{P}.* Enfin, le moyen de commande communique avec le moyen de surveillance et la machine électrique afin de mettre en oeuvre le procédé précédemment décrit. La machine électrique fournit alors une puissance auxiliaire *Wₑ* à la boîte de transmission principale de puissance, évitant ainsi l'apparition de ce déficit de la puissance totale *W_{T},* cette puissance auxiliaire *Wₑ* correspondant à la différence entre la puissance nécessaire au niveau de la boîte de transmission principale de puissance et la somme des puissances prédéterminées *W_{P}* de chaque moteur thermique restant opérationnel.

La valeur de surveillance peut permettre d'identifier un risque de déficit de la puissance totale *W_{T}* soit par la l'augmentation de la puissance d'au moins un moteur thermique soit par la chute de la puissance au niveau du rotor principal.

Ce risque de déficit de la puissance totale *W_{T}* peut être identifié par l'intermédiaire d'au moins un paramètre de surveillance ainsi que par sa dérivée temporelle caractérisant la variation de ce paramètre de surveillance.

Par exemple, le moyen de surveillance comporte un premier moyen de mesure du couple *C_{M}* fourni par chaque moteur thermique permettant d'évaluer une augmentation de puissance d'au moins un moteur thermique.

Le moyen de surveillance peut également, si ces moteurs thermiques sont des turbomoteurs, comporter un second moyen de mesure de la température T4 de la chambre de combustion de chaque turbomoteur ou bien un troisième moyen de mesure de la vitesse instantanée de rotation N1 d'un compresseur de chaque turbomoteur.

Ces trois moyens de mesure mesurant des caractéristiques de chaque moteur thermique permettent d'évaluer une augmentation de la puissance de ce moteur thermique.

Par ailleurs, le moyen de surveillance peut comporter un quatrième moyen de mesure de la vitesse instantanée de rotation *Nᵣ* du rotor principal permettant d'évaluer une chute de puissance au niveau de ce rotor principal.

De plus, le moyen de surveillance peut comporter une unité de calcul et une mémoire, cette unité de calcul exécutant des instructions mémorisées dans cette mémoire permettant de déterminer cette valeur de surveillance, le seuil de détection d'un déficit de la puissance totale *W_{T}* et d'effectuer une comparaison entre la valeur de surveillance et le seuil de détection. Un risque de déficit de la puissance totale *W_{T}* peut ainsi être identifié, par exemple, en appliquant une loi préétablie faisant intervenir un ou plusieurs paramètres de surveillance et éventuellement leurs dérivées respectives. Cette loi préétablie est généralement spécifique à chaque moteur thermique ainsi qu'à chaque aéronef utilisant ces moteurs thermiques.

Le moyen de stockage qui alimente la machine électrique en énergie électrique peut comporter au moins une batterie, rechargeable ou non rechargeable, au moins une pile thermique, au moins une supercapacité ou bien au moins un système de stockage d'énergie cinétique, de type volant d'inertie par exemple.

Afin d'informer le pilote de la puissance auxiliaire *Wₑ* disponible, le dispositif selon l'invention peut afficher une information de la puissance auxiliaire *Wₑ* disponible sur un moyen d'affichage de l'aéronef. Ce dispositif peut également afficher sur ce moyen d'affichage une indication informant si ce dispositif est opérationnel.

Par exemple, l'information de la puissance auxiliaire *Wₑ* disponible indique le temps d'utilisation restant de cette puissance auxiliaire *Wₑ* à sa valeur maximum *Wₘₐₓ* correspondant en fait à l'énergie électrique disponible dans le moyen de stockage pour alimenter la machine électrique.

On peut également afficher la puissance auxiliaire *Wₑ* disponible sous la forme d'une indication de la puissance motrice totale *W_{T}* maximale que peut fournir l'installation motrice hybride, à l'instar de l'affichage de la puissance disponible selon les régimes de puissance d'urgence OEI 30" et OEI 2', cette puissance motrice totale *W_{T}* maximale étant la somme de la puissance prédéterminée *W_{P}* de chaque moteur thermique restant opérationnel et de la puissance auxiliaire *Wₑ* disponible. Cette indication peut alors être variable en fonction de l'énergie électrique disponible dans le moyen de stockage de l'énergie électrique.

Selon un autre mode de réalisation de ce dispositif, la machine électrique peut fonctionner en mode générateur, transformant alors une énergie mécanique du rotor principal ou bien d'au moins un moteur thermique en énergie électrique. Le moyen de stockage comportant au moins un moyen rechargeable de stockage d'énergie électrique, la machine électrique permet alors de charger chaque moyen rechargeable de stockage.

Le dispositif peut également comporter un moyen de coupure de l'alimentation électrique entre la machine électrique et le moyen de stockage. En effet, il est intéressant de pouvoir couper le circuit électrique reliant ces composants pour des raisons de sécurité, afin d'isoler ces composants pour par exemple les protéger contre une surtension pouvant les dégrader, voire provoquer un incendie.

Par ailleurs, la machine électrique peut être remplacée, pour la fourniture de la puissance auxiliaire, par un moteur utilisant une autre source d'énergie que l'électricité. Par exemple, la machine électrique est remplacée par un moteur pneumatique ou bien un moteur pyrotechnique. Par contre, ces types de moteurs ne sont pas réversibles.

L'invention et ses avantages apparaîtront avec plus de détails dans le cadre de la description qui suit avec des exemples de réalisation donnés à titre illustratif en référence aux figures annexées qui représentent :
- les figures 1A et 1B, deux schémas synoptiques du procédé selon l'invention,
- la figure 2, un aéronef bimoteur équipé d'un dispositif selon l'invention, et
- la figure 3, un moyen d'affichage d'un tel dispositif.

Les éléments présents dans plusieurs figures distinctes sont affectés d'une seule et même référence.

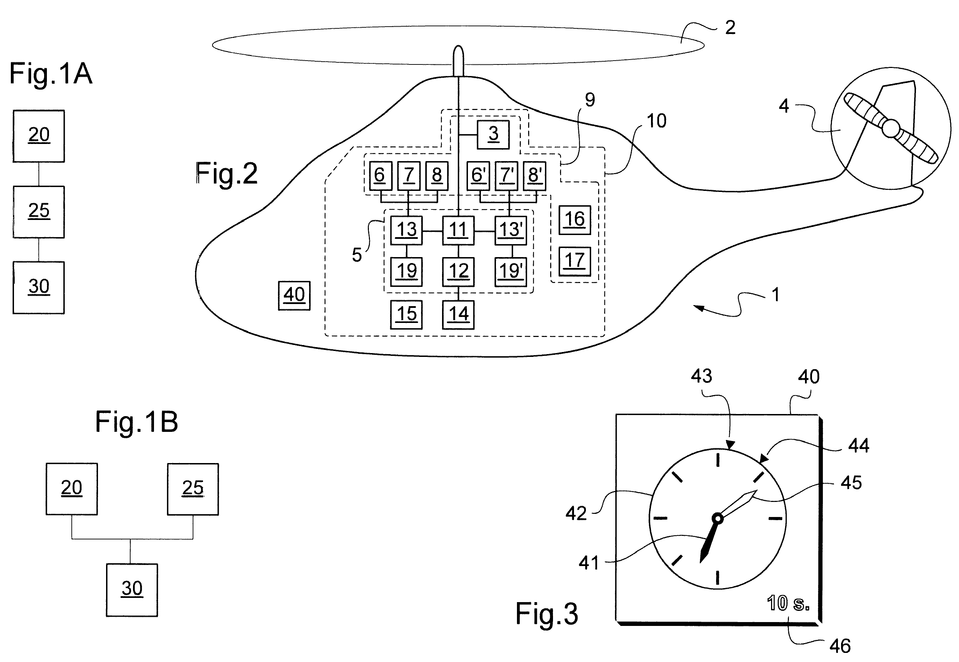

Les figures 1A et 1B décrivent deux déroulements du procédé de gestion d'une panne moteur sur un aéronef 1 à voilure tournante selon l'invention. La figure 2 décrit un aéronef 1 à voilure tournante équipé d'un dispositif 10 de gestion d'une panne moteur selon l'invention.

Ce procédé et ce dispositif 10 permettent ainsi au pilote de manoeuvrer l'aéronef en sécurité, c'est-à-dire avec une puissance motrice suffisante, malgré une panne d'un moteur thermique de cet aéronef et sans pour autant solliciter le moteur thermique restant opérationnel au-delà de conditions de fonctionnement prédéterminées.

Un tel dispositif 10 selon l'invention, représenté sur la figure 2, comporte une installation motrice hybride 5 munie de deux moteurs thermiques 13,13', d'une machine électrique 12 pouvant fournir une puissance maximum *Wₘₐₓ,* d'une boîte de transmission principale de puissance 11 et de deux boîtiers électroniques de contrôle EECU 19,19' reliés respectivement à un moteur thermique 13,13' et fournissant des caractéristiques de fonctionnement de chaque moteur thermique 13,13'. Ce dispositif 10 comporte également un moyen de stockage 14 d'énergie électrique, un moyen de surveillance 9 muni d'au moins un moyen de mesure, d'une unité de calcul 17 et d'une mémoire 16 et un moyen de commande 15 de la machine électrique 12.

L'installation motrice hybride 5 est apte à entraîner en rotation un rotor principal 2 de l'aéronef 1 qui tourne en vol à une vitesse instantanée de rotation *Nr.* L'aéronef 1 comporte également un moyen de mesure 3 de cette vitesse instantanée de rotation *Nr* du rotor principal 2 et un moyen d'affichage 40.

Le procédé selon l'invention se compose de trois étapes. Il comporte une première étape de contrôle 20 au cours de laquelle on contrôle, pendant chaque vol de l'aéronef 1, le fonctionnement de chaque moteur thermique 13,13' afin de détecter une panne moteur. Ensuite, au cours d'une seconde étape de surveillance 25, on détermine une valeur de surveillance relative à au moins un paramètre de surveillance et un seuil de détection d'un déficit de la puissance totale *W_{T}* de l'installation motrice hybride 5, puis on effectue une comparaison en comparant cette valeur de surveillance à ce seuil de détection afin d'identifier un risque de déficit de la puissance totale *W_{T}* de l'installation motrice hybride 5. Enfin, au cours d'une troisième étape de commande 30, on commande la machine électrique 12 pour fournir une puissance auxiliaire *Wₑ* à la boîte de transmission principale de puissance 11 afin d'éviter l'apparition de ce déficit de puissance motrice totale *W_{T},* permettant ainsi au pilote de manoeuvrer l'aéronef 1 sans que le moteur thermique 13,13' restant opérationnel soit sollicité au-delà de ses conditions de fonctionnement prédéterminées.

Ces conditions de fonctionnement prédéterminées des moteurs thermiques 13,13' se caractérisent principalement par une puissance prédéterminée *W_{P}* que chaque moteur thermique 13,13' ne doit pas dépasser ou, tout du moins, dont le dépassement doit être limité. Le déficit de la puissance totale *W_{T}* de l'installation motrice hybride 5 apparaît alors dès qu'au moins un moteur thermique 13,13' doit fournir une puissance supérieure à cette puissance prédéterminée *W_{P}* et correspond à la différence entre la puissance nécessaire au niveau de la boîte de transmission principale de puissance 11 et la somme de la puissance prédéterminée *W_{P}* du moteur thermique 13,13' restant opérationnel.

Selon un premier mode de réalisation de l'invention, la puissance prédéterminée *W_{P}* de chaque moteur thermique est la puissance d'urgence *OEI* 30" de ce moteur thermique.

Selon un second mode de réalisation de l'invention, la puissance prédéterminée *W_{P}* de chaque moteur thermique est la puissance d'urgence *OEI* 2' de ce moteur thermique.

Selon un troisième mode de réalisation de l'invention, la puissance prédéterminée *W_{P}* de chaque moteur thermique est la puissance d'urgence *OEI Cont* de ce moteur thermique.

Selon un quatrième mode de réalisation de l'invention, la puissance prédéterminée *W_{P}* de chaque moteur thermique est la Puissance Maximale Continue *PMC* de ce moteur thermique.

Lors d'une panne d'un moteur thermique 13,13', l'autre moteur thermique 13,13' de l'installation motrice hybride 5 reste opérationnel, c'est-à-dire qu'il peut fournir une puissance mécanique à la boîte de transmission principale de puissance 11.

Lors de l'étape de contrôle 20, le contrôle du fonctionnement de chaque moteur thermique 13,13' et la détection d'une panne d'un moteur thermique 13,13' sont réalisés de façon connue par l'intermédiaire de chaque boîtier électronique de contrôle *EECU* ou bien de chaque calculateur moteur *FADEC* lorsque l'aéronef en dispose.

Lors de l'étape de surveillance 25, on détermine une valeur de surveillance relative à au moins un paramètre de surveillance et un seuil de détection d'un déficit de la puissance totale *W_{T},* puis on effectue une comparaison en comparant cette valeur de surveillance à ce seuil de détection.

Le moyen de surveillance 9 comporte plusieurs moyens de mesure 3,6,7,8,6',7',8', afin de mesurer les paramètres de surveillance, par exemple la vitesse de rotation *Nr* du rotor principal 2 par le quatrième moyen de mesure 3. De même, les premiers moyens de mesure 6, 6' permettent de mesurer le couple *C_{M}* en sortie de chaque moteur thermique 13,13' alors que, lorsque chaque moteur thermique 13,13' est un turbomoteur, les seconds moyens de mesure 7,7' permettent de mesurer la température T4 de la chambre de combustion de chaque turbomoteur et les troisièmes moyens de mesure 8,8' la vitesse de rotation *N1* du compresseur de chaque turbomoteur 13,13'. La valeur de surveillance peut être égale à un de ces paramètres de surveillance.

Le seuil de détection d'un déficit de la puissance totale *W_{T}* correspond à une limite de la valeur de surveillance correspondant à l'apparition d'un déficit de la puissance totale *W_{T}* en prenant en compte une marge de sécurité permettant ainsi d'anticiper l'apparition du déficit de la puissance totale *W_{T}.*

La comparaison de la valeur de surveillance et du seuil de détection d'un déficit de la puissance totale *W_{T}* permet d'identifier un risque de déficit de la puissance totale *W_{T},* dès que la valeur de surveillance dépasse le seuil de détection.

Il est également possible de combiner plusieurs paramètres de surveillance dans une loi préétablie, afin de déterminer la valeur de surveillance et, par suite, d'identifier de façon fiable le risque de ce déficit de la puissance totale *W_{T}.* Cette loi préétablie peut être stockée dans la mémoire 16, l'unité de calcul 17 exécutant cette loi préétablie afin de déterminer la valeur de surveillance.

De plus, on peut également, durant cette étape de surveillance 25, déterminer la dérivée temporelle de chaque paramètre de surveillance afin de connaître la variation de ce paramètre de surveillance. La valeur de surveillance peut alors être le résultat d'une loi préétablie combinant au moins un paramètre de surveillance et sa dérivée temporelle permettant notamment d'anticiper l'apparition de ce déficit de la puissance totale *W_{T}* de l'installation motrice hybride 5.

Suivant le ou les paramètres de surveillance permettant de déterminer la valeur de surveillance, le seuil de détection d'un déficit de la puissance totale *W_{T}* peut être une limite supérieure ou bien une limite inférieure de la valeur de surveillance.

Selon la figure 1A, les étapes de contrôle 20 et de surveillance 25 sont séquentielles, l'étape de contrôle 20 précédant l'étape de surveillance 25. Dans ce cas, on détecte tout d'abord la panne d'un moteur thermique 13,13' avant de déterminer la valeur de surveillance et le seuil de détection d'un déficit de la puissance totale *W_{T}* de l'installation motrice hybride 5 et d'effectuer leur comparaison. Ainsi, la comparaison de la valeur de surveillance et du seuil de détection est effectuée uniquement si une panne d'un moteur thermique 13,13' est détectée.

Par contre, selon la figure 1B, les étapes de contrôle 20 et de surveillance 25 sont simultanées, la détection d'une panne d'un moteur thermique et la comparaison de la valeur de surveillance et du seuil de détection, étant réalisées en parallèle. De fait, dès que les deux conditions sont réunies, le procédé selon l'invention peut être plus réactif pour fournir la puissance auxiliaire *Wₑ* à la boîte de transmission principale de puissance 11.

Lors de l'étape de commande 30, après détection d'une panne moteur et dépassement du seuil de détection d'un déficit de la puissance totale *W_{T}* de l'installation motrice hybride 5, la machine électrique 12 fournit une puissance auxiliaire *Wₑ* à la boîte de transmission principale de puissance 11, permettant ainsi d'éviter le déficit de la puissance totale *W_{T}* de l'installation motrice hybride 5 consécutif à cette panne moteur et aux sollicitations du pilote de l'aéronef 1. Ainsi, le pilote manoeuvre l'aéronef 1 en sécurité, sans pour autant solliciter le moteur thermique 13,13' restant opérationnel au-delà de ses conditions de fonctionnement prédéterminées.

La machine électrique 12 est alors dans un mode de fonctionnement moteur, c'est-à-dire qu'elle transforme une énergie électrique, stockée dans le moyen de stockage 14, en puissance mécanique auxiliaire.

La puissance auxiliaire *Wₑ* que doit fournir la machine électrique 12 intervient principalement en complément de la puissance du moteur thermique 13,13' restant opérationnel lors de la panne de l'autre moteur thermique 13,13'.

Cette machine électrique 12 ne remplace donc pas un moteur thermique 13,13' pour entraîner le rotor principal 2 lors d'un fonctionnement normal de l'aéronef 1, mais uniquement dans des phases particulières dans lesquelles l'aéronef 1 est dans un mode de fonctionnement dégradé. La puissance maximum *Wₘₐₓ* de la machine électrique 12 peut donc être limitée.

Par ailleurs, la fourniture de cette puissance auxiliaire *Wₑ* à la boîte de transmission principale de puissance 11 lors de la panne d'un moteur thermique 13,13' peut permettre l'augmentation d'une part de la masse maximum au décollage de cet aéronef 1 et d'autre part de son domaine de vol.

En effet, l'utilisation du procédé selon l'invention permet de limiter le surdimensionnement des moteurs thermiques 13,13' en réduisant le niveau des puissances d'urgence *OEI 30", OEI* 2' et *OEI Cont* voire en les supprimant, et, par suite, de réduire la consommation de carburant de l'aéronef 1 ainsi qu'éventuellement sa masse à vide.

En conséquence, les performances de cet aéronef 1 peuvent être améliorées par ce gain de masse de l'aéronef 1, ce qui peut permettre par la suite une augmentation d'une part de sa masse maximum au décollage et d'autre part de son domaine de vol.

Par ailleurs, il est intéressant que le pilote de l'aéronef 1 connaisse en permanence la puissance auxiliaire *Wₑ* disponible ou bien la puissance motrice totale *W_{T}* maximale de l'installation motrice hybride 5, cette puissance motrice totale *W_{T}* étant la somme de la puissance prédéterminée *W_{P}* que peut fournir le moteur thermique 13,13' restant opérationnel et de la puissance auxiliaire *Wₑ* disponible de la machine électrique 12.

Le moyen d'affichage 40 de l'aéronef 1, représenté sur la figure 3, permet ainsi d'afficher une information 45,46 de cette puissance auxiliaire *Wₑ* disponible dans le moyen de stockage 14. Cette information 46 peut par exemple être ajoutée au moyen d'affichage 40 indiquant sur un cadran 42 une puissance disponible au niveau de la boîte de transmission principale de puissance 11. On peut également afficher sur ce moyen d'affichage 40 une indication informant si le procédé est opérationnel.

Par exemple, cette information 46 est le temps d'utilisation restant de la puissance auxiliaire *Wₑ* à la puissance maximum *Wₘₐₓ* et l'indication informant si le procédé est opérationnel peut être une couleur de l'affichage de cette information 46.

On peut également afficher la puissance auxiliaire *Wₑ* disponible sous la forme d'une information de la puissance motrice totale *W_{T}* maximale que peut fournir l'installation motrice hybride 5, telle qu'une aiguille 45 sur le cadran 42. Sur la figure 3, les repères 43,44 représentent respectivement la puissance disponible selon les régimes de puissance d'urgence OEI 30" et OEI 2'. Cette information, c'est-à-dire la position de l'aiguille 45, peut alors être variable en fonction de l'énergie électrique disponible dans le moyen de stockage 14 de l'énergie électrique.

Le moyen de stockage 14 est dimensionné pour permettre d'assister le pilote lors de la panne d'un moteur thermique 13,13', c'est-à-dire afin de stocker une quantité d'énergie électrique nécessaire et suffisante. De fait, la masse de ce moyen de stockage 14 est minimisée. De plus, ce moyen de stockage 14 peut être rechargeable ou non.

Par exemple, le moyen de stockage 14 comporte au moins une batterie rechargeable, une pile thermique ou bien une supercapacité.

Par ailleurs, la machine électrique 12 est une machine réversible et peut fonctionner aussi bien en mode de fonctionnement moteur que générateur. De la sorte, lorsqu'elle est en mode générateur, cette machine électrique 12 peut transformer par exemple une énergie mécanique du rotor principal 2 ou des moteurs thermiques 13,13' en énergie électrique.

Selon un autre mode de réalisation de l'invention, la machine électrique 12 peut alors, en mode générateur, fournir de l'énergie électrique pour charger le moyen de stockage 14, ce moyen de stockage 14 étant rechargeable et destiné à l'alimentation électrique de la machine électrique 12 ainsi qu'à l'alimentation électrique générale de l'aéronef 1.

Avantageusement, le moyen de stockage 14, destiné entre autres à l'alimentation électrique générale de l'aéronef 1, peut alors permettre le démarrage des moteurs thermiques 13,13'. La machine électrique 12 en mode générateur peut permettre l'alimentation électrique générale de l'aéronef 1. De la sorte, le moyen de stockage 14 peut par exemple remplacer au moins une des batteries utilisées traditionnellement pour le démarrage des moteurs thermiques 13,13' et le vol d'urgence de l'aéronef 1 alors que la machine électrique 12 peut remplacer au moins un générateur principal d'électricité de cet aéronef 1.

La suppression d'au moins une batterie et/ou d'au moins un générateur principal d'électricité permet de compenser en partie l'augmentation de masse due à la machine électrique 12 et au moyen de stockage 14.

Cependant, le moyen de stockage 14 correspondant à l'énergie électrique alimentant d'une part la machine électrique 12 et d'autre part l'aéronef 1, la totalité de cette énergie électrique ne peut pas être utilisée pour la machine électrique 12. En effet, lors d'une panne d'un moteur thermique 13,13' ou bien du générateur principal d'électricité, les équipements avioniques de l'aéronef 1 doivent toujours être alimentés. De fait, une partie de l'énergie électrique disponible dans ce moyen de stockage 14 est réservée pour alimenter électriquement ces équipements avioniques, alors que le reste de l'énergie électrique disponible peut être fournie à la machine électrique 12 pour fournir une puissance auxiliaire *Wₑ* à la boîte de transmission principale de puissance 11. De fait, le moyen d'affichage 40 affiche alors l'information 45 en utilisant le reste de cette l'énergie électrique disponible.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de gestion d'une panne moteur sur un aéronef (1) à voilure tournante, ledit aéronef (1) comportant :
- une installation motrice hybride (5) munie d'au moins deux moteurs thermiques (13,13'), d'au moins une machine électrique (12), d'une boîte de transmission principale de puissance (11) et d'au moins un boîtier électronique de contrôle *EECU* (19,19'), chaque boîtier électronique de contrôle *EECU* (19,19') étant relié à un moteur thermique (13,13'), chaque moteur thermique (13,13') pouvant fournir au moins une Puissance Maximale Continue *PMC* ainsi que des puissances d'urgence *OEI 30", OEI* 2' et *OEI cont,* ladite installation motrice hybride (5) fournissant une puissance motrice totale *W_{T}* à ladite boîte de transmission principale de puissance (11),
- au moins un moyen de stockage (14) d'énergie électrique et
- au moins un rotor principal (2) entraîné, en vol, à une vitesse instantanée de rotation *Nr* par ladite installation motrice hybride (5),
**caractérisé en ce que**
- durant une étape de contrôle (20), on contrôle pendant chaque vol le fonctionnement de chaque moteur thermique (13,13') par l'intermédiaire dudit boîtier électronique de contrôle *EECU* (19,19'), afin de détecter une éventuelle panne d'au moins un moteur thermique (13,13'), un moteur thermique (13,13') étant en panne lorsqu'au moins un autre moteur thermique (13,13') met en oeuvre lesdites puissances d'urgence,
- durant une étape de surveillance (25), on détermine une valeur de surveillance relative à au moins un paramètre de surveillance dudit aéronef (1) et un seuil de détection d'un déficit de ladite puissance totale *W_{T},* puis on effectue une comparaison en comparant ladite valeur de surveillance audit seuil de détection afin d'identifier un risque de déficit de ladite puissance totale *W_{T},* ledit déficit de la puissance totale *W_{T}* apparaissant dès qu'au moins un moteur thermique (13,13') doit fournir une puissance supérieure à une puissance prédéterminée *W_{P},* et
- durant une étape de commande (30), lorsqu'une panne d'au moins un moteur thermique (13,13') est détectée et que ledit seuil de détection est dépassé, on commande ladite machine électrique (12) pour fournir une puissance auxiliaire *Wₑ* afin que ladite puissance motrice totale *W_{T}* de ladite installation motrice hybride (5) soit suffisante pour manoeuvrer ledit aéronef (1) en sécurité, chaque moteur thermique (13,13') restant opérationnel ne fournissant pas une puissance supérieure à ladite puissance prédéterminée *W_{P}.*

2. Procédé selon la revendication 1,
**caractérisé en ce que** ladite valeur de surveillance est égale audit paramètre de surveillance.

3. Procédé selon la revendication 1,
**caractérisé en ce que** l'on détermine ladite valeur de surveillance selon une loi préétablie combinant au moins deux paramètres de surveillance.

4. Procédé selon la revendication 1,
**caractérisé en ce qu'**une dérivée temporelle de chaque paramètre de surveillance étant déterminée durant ladite étape de surveillance (25), on détermine ladite valeur de surveillance selon une loi préétablie combinant au moins un paramètre de surveillance et sa dérivée temporelle.

5. Procédé selon l'une quelconque des revendications 1 à 4,
**caractérisé en ce que**, ledit aéronef (1) disposant d'un premier moyen de mesure (6) d'un couple *C_{M}* fourni par chaque moteur thermique (13,13'), un premier paramètre de surveillance est ledit couple *C_{M}* de chaque moteur thermique (13,13').

6. Procédé selon l'une quelconque des revendications 1 à 5,
**caractérisé en ce que**, lesdits moteurs thermiques (13,13') étant des turbomoteurs et ledit aéronef (1) disposant d'un second moyen de mesure (7) d'une température *T4* de la chambre de combustion de chaque moteur thermique (13,13'), un second paramètre de surveillance est ladite température *T4* de la chambre de combustion de chaque moteur thermique (13,13').

7. Procédé selon l'une quelconque des revendications 1 à 6,
**caractérisé en ce que**, lesdits moteurs thermiques (13,13') étant des turbomoteurs et ledit aéronef (1) disposant d'un troisième moyen de mesure (8) d'une vitesse instantanée de rotation *N1* d'un compresseur de chaque moteur thermique (13,13'), un troisième paramètre de surveillance est ladite vitesse instantanée de rotation *N1.*

8. Procédé selon la revendication 7,
**caractérisé en ce que** la valeur de surveillance est une différence entre ledit troisième paramètre de surveillance de deux moteurs thermiques (13,13').

9. Procédé selon l'une quelconque des revendications 1 à 8,
**caractérisé en ce que**, ledit aéronef (1) disposant d'un quatrième moyen de mesure (3) d'une vitesse instantanée de rotation *Nr* dudit rotor principal (2), un quatrième paramètre de surveillance est ladite vitesse instantanée de rotation *Nr*.

10. Procédé selon l'une quelconque des revendications 1 à 9,
**caractérisé en ce que**, ledit aéronef (1) disposant d'un moyen d'affichage (40), on affiche sur ledit moyen d'affichage (40) une information (45,46) relative à ladite puissance auxiliaire *Wₑ* disponible au niveau de ladite machine électrique (12) ainsi qu'une indication informant si ledit procédé est opérationnel.

11. Procédé selon la revendication 10,
**caractérisé en ce que** ladite information (45) est ladite puissance motrice totale *W_{T}* maximale que peut fournir ladite installation motrice hybride (5) à ladite boîte de transmission principale de puissance (11).

12. Procédé selon la revendication 10,
**caractérisé en ce que** ladite information (46) est le temps d'utilisation restant de ladite machine électrique (12) fournissant une puissance maximum *Wₘₐₓ.*

13. Procédé selon l'une quelconque des revendications 1 à 12,
**caractérisé en ce que** ladite puissance prédéterminée *W_{P}* de chaque moteur thermique (13,13') est ladite Puissance Maximale Continue *PMC* de ce moteur thermique (13,13').

14. Procédé selon l'une quelconque des revendications 1 à 12,
**caractérisé en ce que** ladite puissance prédéterminée *W_{P}* de chaque moteur thermique (13,13') est ladite puissance d'urgence *OEI cont* de ce moteur thermique (13,13').

15. Procédé selon l'une quelconque des revendications 1 à 12,
**caractérisé en ce que** ladite puissance prédéterminée *W_{P}* de chaque moteur thermique (13,13') est ladite puissance d'urgence *OEI* 2' de ce moteur thermique (13,13').

16. Procédé selon l'une quelconque des revendications 1 à 12,
**caractérisé en ce que** ladite puissance prédéterminée *W_{P}* de chaque moteur thermique (13,13') est ladite puissance d'urgence *OEI 30"* de ce moteur thermique (13,13').

17. Aéronef (1) à voilure tournante comportant :
- un dispositif (10) de gestion d'une panne moteur muni :
• d'une installation motrice hybride (5) comportant au moins deux moteurs thermiques (13,13'), au moins une machine électrique (12), une boîte de transmission principale de puissance (11) et au moins un boîtier électronique de contrôle *EECU* (19,19'), chaque boîtier électronique de contrôle *EECU* (19,19') étant relié à un moteur thermique (13,13'), chaque moteur thermique (13,13') pouvant fournir au moins une Puissance Maximale Continue *PMC* ainsi que des puissances d'urgence *OEI 30", OEI* 2' et *OEI cont,* ladite installation motrice hybride (5) fournissant une puissance motrice totale *W_{T}* à ladite boîte de transmission principale de puissance (11),
• d'au moins un moyen de stockage (14) d'énergie électrique, et
• d'un moyen de commande (15) de ladite machine électrique (12),
- au moins un rotor principal (2) entraîné en rotation par ladite installation motrice hybride (5) et tournant en vol à une vitesse instantanée de rotation *Nr,*
**caractérisé en ce que** ledit dispositif (10) comporte un moyen de surveillance (9) pour déterminer une valeur de surveillance relative à au moins un paramètre de surveillance dudit aéronef (1) et un seuil de détection d'un déficit de ladite puissance totale *W_{T},* puis effectuer une comparaison en comparant ladite valeur de surveillance audit seuil de détection afin d'identifier un risque de déficit de ladite puissance motrice totale *W_{T},* ledit déficit de la puissance totale *W_{T}* apparaissant dès qu'au moins un moteur thermique (13,13') doit fournir une puissance supérieure à une puissance prédéterminée *W_{P},* ledit moyen de commande (15) communiquant avec ledit moyen de surveillance (9) et ladite machine électrique (12) afin de mettre en oeuvre le procédé selon les revendications 1 à 16.

18. Aéronef (1) selon la revendication 17,
**caractérisé en ce que** ledit moyen de surveillance (9) comporte au moins un moyen de mesure (6,7,8) pour évaluer une augmentation de la puissance de chaque moteur thermique (13,13').

19. Aéronef (1) selon l'une quelconque des revendications 17 à 18,
**caractérisé en ce que** ledit moyen de surveillance (9) comporte au moins un moyen de mesure (3) pour évaluer une chute de la puissance dudit rotor principal (2).

20. Aéronef (1) selon l'une quelconque des revendications 17 à 19,
**caractérisé en ce que** ledit moyen de surveillance (9) comporte une unité de calcul (17) et une mémoire (16), ladite unité de calcul (17) exécutant des instructions mémorisées dans ladite mémoire (16) permettant de déterminer ladite valeur de surveillance, ledit seuil de détection d'un déficit de ladite puissance totale *W_{T}* et d'effectuer ladite comparaison comparant ladite valeur de surveillance audit seuil de détection.

21. Aéronef (1) selon l'une quelconque des revendications 17 à 20,
**caractérisé en ce que** ledit aéronef comporte un moyen d'affichage (40) pour afficher une information (46) relative à ladite puissance auxiliaire *Wₑ* disponible au niveau de ladite machine électrique (12) ainsi qu'une indication informant si ledit dispositif (10) est opérationnel.

22. Aéronef (1) selon l'une quelconque des revendications 17 à 21,
**caractérisé en ce que**, ledit moyen de stockage (14) comportant au moins un moyen rechargeable de stockage, ladite machine électrique (12) peut fonctionner en mode générateur afin de transformer une énergie mécanique dudit rotor principal (2) en énergie électrique pour charger ledit moyen rechargeable de stockage.

23. Aéronef (1) selon l'une quelconque des revendications 17 à 22,
**caractérisé en ce que**, ledit moyen de stockage (14) comportant au moins un moyen rechargeable de stockage, ladite machine électrique (12) peut fonctionner en mode générateur afin de transformer une énergie mécanique d'au moins un moteur thermique (13,13') en énergie électrique pour charger ledit moyen rechargeable de stockage.

## Patentansprüche

1. Verfahren zum Management eines Triebwerkdefekts eines Drehflügel-Luftfahrzeugs (1), wobei das Luftfahrzeug (1) aufweist:
- eine Hybridantriebseinheit (5) mit mindestens zwei Verbrennungsmotoren (13, 13'), mindestens einer elektrischen Maschine (12), einem Hauptleistungsgetriebe (11) und mindestens einer elektronischen Steuerung *EECU* (19, 19'), wobei jede elektronische Steuerung *EECU* (19, 19') mit einem Verbrennungsmotor (13, 13') verbunden ist, wobei jeder Verbrennungsmotor (13, 13') mindestens eine kontinuierliche maximale Leistung *PMC* sowie Notleistungen *OEI 30'; OEI 2'* und *OEI cont* liefern kann, wobei die Hybridantriebseinheit (5) eine Gesamtantriebsleistung *W_{T}* an das Hauptleistungsgetriebe (11) liefert,
- mindestens ein Speichermittel (14) für elektrische Energie und
- mindestens einen Hauptrotor (2), der im Flug von der Hybridantriebseinheit (5) mit einer momentanen Drehgeschwindigkeit *Nr* angetrieben wird,
**dadurch gekennzeichnet, dass**
- während einer Steuerphase (20), während jedes Fluges, der Betrieb eines jeden Verbrennungsmotors (13, 13') mit der Steuerungselektronik *EECU* (19, 19') überwacht wird, um einen möglichen Defekt mindestens eines Verbrennungsmotors (13, 13') zu erfassen, wobei ein Verbrennungsmotor (13, 13') defekt ist, wenn mindestens ein anderer Verbrennungsmotor (13, 13') die Notleistungen bereitstellt,
- während einer Überwachungsphase (25) ein Überwachungswert bezüglich mindestens eines Überwachungsparameters des Luftfahrzeugs (1) und ein Schwellenwert der Erfassung eines Defizits der Gesamtleistung *W_{T}* bestimmt werden, und dann ein Vergleich ausgeführt wird, indem der Überwachungswert mit dem Überwachungsschwellenwert verglichen wird, um ein Risiko eines Defizits der Gesamtleistung *W_{T}* zu identifizieren, wobei das Defizit der Gesamtleistung *W_{T}* auftritt, sobald mindestens ein Verbrennungsmotor (13, 13') eine Leistung liefern muss, die größer als eine vorbestimmte Leistung W*_{P}* ist, und
- während einer Steuerphase (30), wenn ein Defekt an mindestens einem Verbrennungsmotor (13, 13') erfasst wird und der Erfassungsschwellenwert überschritten wird, die elektrische Maschine (12) so gesteuert wird, dass sie eine Hilfsleistung *Wₑ* liefert, damit die Gesamtantriebsleistung *W_{T}* der Hybridantriebseinheit (5) ausreicht, um das Luftfahrzeug (1) sicher zu manövrieren, wobei jeder Verbrennungsmotor (13, 13'), der betriebsbereit bleibt, keine Leistung liefert, die größer als die vorbestimmte Leistung *W_{P}* ist.

2. Verfahren nach Anspruch 1,
**dadurch gekennzeichnet, dass** der Überwachungswert gleich dem Überwachungsparameter ist.

3. Verfahren nach Anspruch 1,
**dadurch gekennzeichnet, dass** der Überwachungswert nach einer vorher festgelegten Regel bestimmt wird, die mindestens zwei Überwachungsparameter kombiniert.

4. Verfahren nach Anspruch 1,
**dadurch gekennzeichnet, dass**, wenn eine zeitweise Abweichung eines jeden Überwachungsparameters während der Überwachungsphase (25) bestimmt wird, der Überwachungswert nach einer vorher festgelegten Regel bestimmt wird, die mindestens einen Überwachungsparameter und seine zeitliche Abweichung kombiniert.

5. Verfahren nach einem der Ansprüche 1 bis 4,
**dadurch gekennzeichnet, dass** das Luftfahrzeug (1) ein erstes Messinstrument (6) für ein Drehmoment *C_{M}* aufweist, das von jedem Verbrennungsmotor (13, 13') geliefert wird, wobei ein erster Überwachungsparameter das Drehmoment *C_{M}* eines jeden Verbrennungsmotors (13, 13') ist.

6. Verfahren nach einem der Ansprüche 1 bis 5,
**dadurch gekennzeichnet, dass** die Verbrennungsmotoren (13, 13') Turbomotoren sind und das Luftfahrzeug (1) über ein zweites Messinstrument (7) für eine Temperatur T4 der Verbrennungskammer eines jeden Verbrennungsmotors (13, 13') verfügt, wobei ein zweiter Überwachungsparameter die Temperatur T4 der Verbrennungskammer eines jeden Verbrennungsmotors (13, 13') ist.

7. Verfahren nach einem der Ansprüche 1 bis 6,
**dadurch gekennzeichnet, dass** die Verbrennungsmotoren (13, 13') Turbomotoren sind und das Luftfahrzeug (1) über ein drittes Messinstrument (8) verfügt zur Messung einer momentanen Drehgeschwindigkeit *N1* eines Kompressors eines jeden Verbrennungsmotors (13, 13'), wobei ein dritter Überwachungsparameter die momentane Drehgeschwindigkeit *N1* ist.

8. Verfahren nach Anspruch 7,
**dadurch gekennzeichnet, dass** der Überwachungswert eine Differenz zwischen dem dritten Überwachungsparameter von zwei Verbrennungsmotoren (13, 13') ist.

9. Verfahren nach einem der Ansprüche 1 bis 8,
**dadurch gekennzeichnet, dass** das Luftfahrzeug (1) über ein viertes Messinstrument (3) für eine momentanen Drehgeschwindigkeit *Nr* des Hauptrotors (2) verfügt, wobei ein vierter Überwachungsparameter die momentane Drehgeschwindigkeit *Nr* ist.

10. Verfahren nach einem der Ansprüche 1 bis 9,
**dadurch gekennzeichnet, dass** das Luftfahrzeug (1) über ein Anzeigemittel (40) verfügt, wobei auf dem Anzeigemittel (40) eine Information (45, 46) bezüglich der Hilfsleistung *Wₑ* angezeigt wird, die an der elektrischen Maschine (12) verfügbar ist, sowie eine Anzeige, die darüber informiert, ob das Verfahren betriebsbereit ist.

11. Verfahren nach Anspruch 10,
**dadurch gekennzeichnet, dass** die Information (45) die maximale Gesamtantriebsleistung *W_{T}* ist, die die Hybridantriebseinheit (5) an das Hauptleistungsgetriebe (11) abgeben kann.

12. Verfahren nach Anspruch 10,
**dadurch gekennzeichnet, dass** die Information (46) die verbleibende Betriebsdauer der elektrischen Maschine (12) ist, die eine maximale Leistung *Wₘₐₓ* liefert.

13. Verfahren nach einem der Ansprüche 1 bis 12,
**dadurch gekennzeichnet, dass** die vorbestimmte Leistung *W_{P}* eines jeden Verbrennungsmotors (13, 13') die kontinuierliche maximale Leistung *PMC* dieses Verbrennungsmotors (13, 13') ist.

14. Verfahren nach einem der Ansprüche 1 bis 12,
**dadurch gekennzeichnet, dass** die vorbestimmte Leistung *W_{P}* eines jeden Verbrennungsmotors (13, 13') die Notleistung *OEI cont* dieses Verbrennungsmotors (13, 13') ist.

15. Verfahren nach einem der Ansprüche 1 bis 12,
**dadurch gekennzeichnet, dass** die vorbestimmte Leistung *W_{P}* eines jeden Verbrennungsmotors (13, 13') die Notleistung *OEI* 2' dieses Verbrennungsmotors (13, 13') ist.

16. Verfahren nach einem der Ansprüche 1 bis 12,
**dadurch gekennzeichnet, dass** die vorbestimmte Leistung *W_{P}* eines jeden Verbrennungsmotors (13, 13') die Notleistung *OEI30"* dieses Verbrennungsmotors (13, 13') ist.

17. Drehflügel-Luftfahrzeug (1) mit:
- einer Vorrichtung (10) zum Managen eines Motordefekts mit:
• einer Hybridantriebseinheit (5) mit mindestens zwei Verbrennungsmotoren (13, 13'), mindestens einer elektrischen Maschine (12), einem Hauptleistungsgetriebe (11) und mindestens einer Steuerelektronik *EECU* (19, 19'), wobei jede Steuerelektronik *EECU* (19, 19') mit einem Verbrennungsmotor (13, 13') verbunden ist, wobei jeder Verbrennungsmotor (13, 13') mindestens eine kontinuierliche maximale Leistung *PMC* sowie Notleistungen *OEI 30", OEI 2'* und *OEI cont* abgeben kann, wobei die Hybridantriebseinheit (5) eine Gesamtantriebsleistung *W_{T}* an das Hauptleistungsgetriebe (11) abgibt,
• mindestens einem Speichermittel (14) für elektrische Energie, und
• einem Mittel (15) zum Steuern der elektrischen Maschine (12),
- mindestens einem Hauptrotor (12), der von der Hybridantriebseinheit (5) drehangetrieben wird und sich im Flug mit einer momentanen Drehgeschwindigkeit *Nr* dreht,
**dadurch gekennzeichnet, dass** die Vorrichtung (10) ein Überwachungsmittel (9) aufweist zum Bestimmen eines Überwachungswertes bezüglich mindestens eines Überwachungsparameters des Luftfahrzeugs (1) und eines Schwellenwertes der Erfassung eines Defizits der Gesamtleistung *W_{T}*, um dann einen Vergleich durchzuführen, indem der Überwachungswert mit dem Schwellenwert der Überwachung verglichen wird, um ein Risiko eines Defizits der Gesamtantriebsleistung *W_{T}* zu identifizieren, wobei das Defizit der Gesamtleistung *W_{T}* auftritt, sobald mindestens ein Verbrennungsmotor (13, 13') eine Leistung liefern muss, die größer ist als eine vorbestimmte Leistung *W_{P}*, wobei das Steuermittel (15) mit dem Überwachungsmittel (9) und der elektrischen Maschine (12) kommuniziert, um das Verfahren nach den Ansprüchen 1 bis 16 auszuführen.

18. Luftfahrzeug (1) nach Anspruch 17,
**dadurch gekennzeichnet, dass** das Überwachungsmittel (9) mindestens ein Messinstrument (6, 7, 8) aufweist zum Bestimmen einer Steigerung der Leistung eines jeden Verbrennungsmotors (13, 13').

19. Luftfahrzeug (1) nach einem der Ansprüche 17 bis 18,
**dadurch gekennzeichnet, dass** das Überwachungsmittel (9) mindestens ein Messinstrument (3) aufweist zum Bestimmen eines Leistungsabfalls des Hauptrotors (2).

20. Luftfahrzeug (1) nach einem der Ansprüche 17 bis 19,
**dadurch gekennzeichnet, dass** das Überwachungsmittel (9) eine Recheneinheit (17) und einen Speicher (16) aufweist, wobei die Recheneinheit (17) in dem Speicher (16) gespeicherte Befehle ausführt, die es erlauben, den Überwachungswert und den Schwellenwert der Erfassung eines Defizits der Gesamtleistung *W_{T}* zu bestimmen und den Vergleich durchzuführen, bei dem der Überwachungswert mit dem Erfassungsschwellenwert verglichen wird.

21. Luftfahrzeug (1) nach einem der Ansprüche 17 bis 20,
**dadurch gekennzeichnet, dass** das Luftfahrzeug ein Anzeigemittel (40) aufweist zum Anzeigen einer Information (46) bezüglich der Hilfsleistung *Wₑ*, die an der elektrischen Maschine (12) verfügbar ist, sowie einer Angabe, die darüber informiert, ob die Vorrichtung (10) betriebsbereit ist.

22. Luftfahrzeug (1) nach einem der Ansprüche 17 bis 21,
**dadurch gekennzeichnet, dass** das Speichermittel (14) mindestens ein wiederaufladbares Speichermittel aufweist, wobei die elektrische Maschine in einem Generatormodus betrieben werden kann, um eine mechanische Energie des Hauptrotors (2) in elektrische Energie umzuwandeln, um das wiederaufladbare Speichermittel aufzuladen.

23. Luftfahrzeug (1) nach einem der Ansprüche 17 bis 22,
**dadurch gekennzeichnet, dass** das Speichermittel (14) mindestens ein wiederaufladbares Speichermittel aufweist, wobei die elektrische Maschine (12) in einem Generatormodus betrieben werden kann, um mechanische Energie mindestens eines Verbrennungsmotors (13, 13') in elektrische Energie umzuwandeln, um das wiederaufladbare Speichermittel aufzuladen.

## Claims

1. A method for managing an engine failure on a rotary-wing aircraft (1), said aircraft (1) comprising:
- a hybrid power plant (5) provided with at least two heat engines (13, 13'), at least one electric machine (12), a main power transmission gearbox (11) and at least one electronic control unit *EECU* (19, 19'), each electronic control unit *EECU* (19, 19') being connected to a heat engine (13, 13'), each heat engine (13, 13') being capable of delivering at least a Maximum Continuous Power *MCP* and *OEI 30", OEI 2'* and *OEI cont* contingency powers, said hybrid power plant (5) delivering a total driving power *W_{T}* to said main power transmission gearbox (11),
- at least one storage means (14) for electrical energy, and
- at least one main rotor (2) which is driven, in flight, at an instantaneous speed of rotation *Nr* by said hybrid power plant (5),
**characterised in that**
- during a checking step (20), the operation of each heat engine (13, 13') is checked during each flight by means of said electronic control unit *EECU* (19, 19'), in order to detect any failure of at least one heat engine (13, 13'), a heat engine (13, 13') having failed when at least one other heat engine (13, 13') implements said contingency powers,
- during a monitoring step (25), a monitoring value relating to at least one monitoring parameter of said aircraft (1) and a detection threshold for a deficit of said total power *W_{T}* are determined, then a comparison is made by comparing said monitoring value with said detection threshold in order to identify a risk of a deficit in said total power *W_{T},* said deficit in the total power *W_{T}* appearing whenever at least one heat engine (13, 13') has to deliver a power greater than a predetermined power *W_{P},* and
- during a control step (30), when a failure of at least one heat engine (13, 13') is detected and said detection threshold is exceeded, said electric machine (12) is controlled to deliver an auxiliary power *Wₑ* so that said total driving power *W_{T}* of said hybrid power plant (5) is sufficient to manoeuvre said aircraft (1) safely, each heat engine (13, 13') which remains operational not delivering a power greater than said predetermined power *W_{P}*.

2. A method according to Claim 1,
**characterised in that** said monitoring value is equal to said monitoring parameter.

3. A method according to Claim 1,
**characterised in that** said monitoring value is determined in accordance with a pre-established law combining at least two monitoring parameters.

4. A method according to Claim 1,
**characterised in that**, a time derivative of each monitoring parameter being determined during said monitoring step (25), said monitoring value is determined in accordance with a pre-established law combining at least one monitoring parameter and its time derivative.

5. A method according to any one of Claims 1 to 4,
**characterised in that**, said aircraft (1) having a first measurement means (6) for measuring a torque *C_{M}* delivered by each heat engine (13, 13'), a first monitoring parameter is said torque *C_{M}* of each heat engine (13, 13').

6. A method according to any one of Claims 1 to 5,
**characterised in that**, said heat engines (13, 13') being turboshaft engines and said aircraft (1) having a second measurement means (7) for measuring a temperature *T4* of the combustion chamber of each heat engine (13, 13'), a second monitoring parameter is said temperature T4 of the combustion chamber of each heat engine (13, 13').

7. A method according to any one of Claims 1 to 6,
**characterised in that**, said heat engines (13, 13') being turboshaft engines and said aircraft (1) having a third measurement means (8) for measuring an instantaneous speed of rotation *N1* of a compressor of each heat engine (13, 13'), a third monitoring parameter is said instantaneous speed of rotation *N1.*

8. A method according to Claim 7,
**characterised in that** the monitoring value is a difference between said third monitoring parameter of two heat engines (13, 13').

9. A method according to any one of Claims 1 to 8,
**characterised in that**, said aircraft (1) having a fourth measurement means (3) for measuring an instantaneous speed of rotation *Nr* of said main rotor (2), a fourth monitoring parameter is said instantaneous speed of rotation *Nr.*

10. A method according to any one of Claims I to 9,
**characterised in that**, said aircraft (1) having a display means (40), there is displayed on said display means (40) information (45, 46) relating to said auxiliary power *Wₑ* available from said electric machine (12) and also an indication indicating whether said method is operational.

11. A method according to Claim 10,
**characterised in that** said information (45) is said maximum total driving power *W_{T}* which said hybrid power plant (5) can deliver to said main power transmission gearbox (11).

12. A method according to Claim 10,
**characterised in that** said information (46) is the remaining time of use of said electric machine (12) delivering a maximum power *Wₘₐₓ*.

13. A method according to any one of Claims 1 to 12,
**characterised in that** said predetermined power *W_{P}* of each heat engine (13, 13') is said Maximum Continuous Power *MCP* of this heat engine (13,13').

14. A method according to any one of Claims 1 to 12,
**characterised in that** said predetermined power *W_{P}* of each heat engine (13, 13') is said contingency power *OEI cont* of this heat engine (13, 13').

15. A method according to any one of Claims 1 to 12,
**characterised in that** said predetermined power *W_{P}* of each heat engine (13, 13') is said *OEI 2'* contingency power of this heat engine (13, 13').

16. A method according to any one of Claims 1 to 12,
**characterised in that** said predetermined power *W_{P}* of each heat engine (13, 13') is said *OEI 30"* contingency power of this heat engine (13, 13').

17. A rotary-wing aircraft (1) comprising:
- a device (10) for managing an engine failure, provided with:
• a hybrid power plant (5) comprising at least two heat engines (13, 13'), at least one electric machine (12), a main power transmission gearbox (11) and at least one electronic control unit *EECU* (19, 19'), each electronic control unit *EECU(19,* 19') being connected to a heat engine (13, 13'), each heat engine (13, 13') being capable of delivering at least a Maximum Continuous Power *MCP* and *OEI 30'', OEI 2*' and *OEI cont* contingency powers, said hybrid power plant (5) delivering a total driving power *W_{T}* to said main power transmission gearbox (11),
• at least one storage means (14) for electrical energy, and
• a control means (15) for said electric machine (12),
- at least one main rotor (2) which is driven in rotation by said hybrid power plant (5) and rotating in flight at an instantaneous speed of rotation *Nr,* **characterised in that** said device (10) comprises a monitoring means (9) for determining a monitoring value relating to at least one monitoring parameter of said aircraft (1) and a detection threshold for a deficit in said total power *W_{T},* then making a comparison by comparing said monitoring value with said detection threshold in order to identify a risk of a deficit in said total driving power *W_{T},* said deficit in the total power *W_{T}* appearing whenever at least one heat engine (13, 13') has to deliver a power greater than a predetermined power *W_{P},* said control means (15) communicating with said monitoring means (9) and said electric machine (12) in order to implement the method according to Claims 1 to 16.

18. An aircraft (1) according to Claim 17,
**characterised in that** said monitoring means (9) comprises at least one measurement means (6, 7, 8) for evaluating an increase in the power of each heat engine (13, 13').

19. An aircraft (1) according to any one of Claims 17 to 18,
**characterised in that** said monitoring means (9) comprises at least one measurement means (3) for evaluating a drop in the power of said main rotor (2).

20. An aircraft (1) according to any one of Claims 17 to 19,
**characterised in that** said monitoring means (9) comprises a calculation unit (17) and a memory (16), said calculation unit (17) executing instructions stored in said memory (16) which make it possible to determine said monitoring value, said detection threshold for a deficit in said total power *W_{T}* and to perform said comparison comparing said monitoring value with said detection threshold.

21. An aircraft (1) according to any one of Claims 17 to 20,
**characterised in that** said aircraft comprises a display means (40) for displaying information (46) relating to said auxiliary power *Wₑ* available from said electric machine (12) and also an indication indicating whether said device (10) is operational.

22. An aircraft (1) according to any one of Claims 17 to 21,
**characterised in that**, said storage means (14) comprising at least one rechargeable storage means, said electric machine (12) being capable of operating in generator mode in order to transform mechanical energy of said main rotor (2) into electrical energy for charging said rechargeable storage means.

23. An aircraft (1) according to any one of Claims 17 to 22,
**characterised in that**, said storage means (14) comprising at least one rechargeable storage means, said electric machine (12) is capable of operating in generator mode in order to transform mechanical energy of at least one heat engine (13, 13') into electrical energy for charging said rechargeable storage means.
